# EUROPÄISCHE PATENTSCHRIFT

(11) **EP 3 133 230 B1**
(45) Veröffentlichungstag und Bekanntmachung des Hinweises auf die Patenterteilung: **24.07.2019**
(21) Anmeldenummer: 16182957.7
(22) Anmeldetag: 05.08.2016
(51) Int. Cl.: E05C 19/02, E05F 1/16

(54) **VORRICHTUNG FÜR DIE BEWEGUNG EINES MÖBELTEILS UND MÖBEL**
DEVICE FOR MOVING A PIECE OF FURNITURE AND FURNITURE
DISPOSITIF DESTINE AU DEPLACEMENT D'UN ELEMENT DE MEUBLE ET MEUBLE

(30) Priorität: 21.08.2015 DE 202015104431 U
(43) Veröffentlichungstag der Anmeldung: 22.02.2017
(73) Patentinhaber: Grass GmbH, 6973 Höchst (AT)
(72) Erfinder: Karu, Felix, 6844 Altach (AT)
(74) Vertreter: Otten, Roth, Dobler & Partner mbB Patentanwälte

(56) Entgegenhaltungen:
- CN-U- 201 843 427
- DE-A1-102013 100 652
- JP-A- H11 264 270
- JP-A- 2007 255 018
- US-A1- 2007 114 896

## Beschreibung

### Stand der Technik

Bei Möbelteilen wie zum Beispiel Schubladen, Möbeltüren oder Möbelklappen, die an einem Möbelkorpus eines Möbels bewegbar aufgenommen sind, kommen Vorrichtungen zur Bewegungsbeeinflussung des Möbelteils zum Einsatz. Derartige Vorrichtungen sind z. B. durch eine Einheit gebildet, die an dem Möbelteil oder dem Möbelkorpus an geeigneter Stelle anbringbar ist und beispielsweise aus der JP 2007 255 018 A oder der CN 201 843 427 U bekannt.

Bei modernen und bedienerfreundlichen Möbeln sind beispielsweise Vorrichtungen für die Bewegung des Möbelteils bekannt, die wahlweise vorgesehen werden können. Die Vorrichtung wird insbesondere separat zu einer dem Möbelteil zugehörigen Schiebeführung wie einem Voll- oder Teilauszug oder einer Schwenkführung wie einem Scharnier am Möbel montiert. Mit der Vorrichtung lässt sich eine Zusatzfunktion zur Beeinflussung der Möbelteilbewegung bereitstellen. Die Zusatzfunktion kann individuell auf die Art und Größe des Möbelteils abgestimmt werden, insbesondere um eine bedienerfreundliche Nutzung des Möbelteils zu ermöglichen. Dies betrifft zum Beispiel Systeme zur Bereitstellung einer Öffnungsfunktion mit einer auf das Möbelteil abstimmbaren Kraftunterstützung.

### Aufgabe und Vorteile der Erfindung

Aufgabe der vorliegenden Erfindung ist es, eine Zusatzfunktion für eine Möbelteilbewegung mittels einer Schiebeführung, wie einem Voll- oder Teilauszug, oder einer Schwenkführung vorteilhaft bereitzustellen, insbesondere um eine vorteilhafte Kraftunterstützung einer Öffnungsbewegung zum Öffnen des Möbelteils auf einer ersten Teilstrecke des Öffnungsweges zu ermöglichen.

Diese Aufgabe wird durch die unabhängigen Ansprüche gelöst.

Die abhängigen Ansprüche thematisieren vorteilhafte Varianten der Erfindung.

Die Erfindung geht aus von einer Vorrichtung zum Bewegen eines bewegbaren Möbelteils in eine Öffnungsrichtung des Möbelteils in Bezug zu einem Möbelkorpus eines Möbels, wobei das bewegbare Möbelteil über Führungsmittel in die Öffnungsrichtung und in eine der Öffnungsrichtung entgegengesetzte Schließrichtung bringbar ist, wobei die Vorrichtung einen an einem Lagerteil aufgenommenen Kraftspeicher umfasst, so dass mit der montierten Vorrichtung das bewegbare Möbelteil unter der Wirkung des Kraftspeichers in die Öffnungsrichtung des bewegbaren Möbelteils bringbar ist, und wobei Einstellmittel zur Verstellung des Kraftspeichers vorhanden sind.

Mit der Vorrichtung können unterschiedliche Bewegungsfunktionen bezüglich der Möbelteilbewegung am Möbel vorteilhaft eingerichtet werden, insbesondere für eine Öffnungsbewegung aus der eingefahrenen oder eingeschwenkten Stellung am Korpus, indem eine Kraft des Kraftspeichers bei der Bewegung des Möbelteils unterstützend wirkt. Damit wird die Nutzung des Möbelteils durch eine Person erleichtert bzw. der notwendige Kraftaufwand für die Person verringert, so dass auch schwere Möbelteile bequem mit einem vergleichsweise geringen eigenen Kraftaufwand bewegbar sind bzw. auch schwächere Personen wie ältere Menschen und Kinder das Möbelteil öffnen können. Die Vorrichtung kann vorzugsweise unabhängig von der Schiebeführung oder des Scharniers, die insbesondere als Standardführung oder Standardscharnier ausgebildet sind, vorgesehen werden. Die eigentliche Bewegungsführung in diesen Fällen ist von der erfindungsgemäßen Vorrichtung mit dem Kraftspeicher unabhängig vorhanden. Die Vorrichtung mit der kraftunterstützenden Funktion ist am Möbel bzw. dem bewegbaren Möbelteil demgemäß problemlos nachrüstbar und/oder austauschbar.

Der Kern der Erfindung liegt darin, dass die Einstellmittel zwei voneinander getrennte Führungsbereiche umfassen, die zur Führung eines Eingreifabschnitts am Lagerteil abgestimmt sind, wobei die Führungsbereiche relativ zueinander versetzbar sind, um einen Bereich vorzugeben, in dem der Eingreifabschnitt aufgenommen und positioniert ist, wobei die Position des Eingreifabschnitts durch das Zusammenwirken der beiden Führungsbereiche bestimmt ist, so dass die Position des Eingreifabschnitts an der Vorrichtung abhängig ist von der Relativstellung der beiden Führungsbereiche zueinander,wobei sich die beiden Führungsbereiche benachbart teilweise überlagern und einen Überlagerungsbereich festlegen, in welchem der Eingreifabschnitt aufgenommen und positioniert ist. Dies ermöglicht eine besonders präzise und ruckfreie Verstellung beziehungsweise Verstellbewegung des Eingreifabschnitts und damit des Lagerteils. Damit lässt sich eine Einstellung des Kraftspeichers im Hinblick auf ein vorgebbares gespeichertes Kraftmaß vorteilhaft realisieren.

Der Eingreifabschnitt ist vorzugsweise so am Lagerteil vorhanden, dass der Eingreifabschnitt durch eine Freilassung wie z. B. eine Öffnung in einem Bauteil greift, z. B. in einem Stellteil, das einen ersten Führungsbereich bereitstellt. Der Eingreifabschnitt verlängert sich vorzugsweise durch die Öffnung im Stellteil bis in den zweiten Führungsbereich, der nicht vom Stellteil gebildet ist, zum Beispiel eine Führungsbahn.

Vorzugsweise umfasst der Kraftspeicher eine Krafteinheit mit vorgespannten Federn wie z. B. ein Federpaket aus mehreren einzelnen in der Wirkung sich ergänzenden Federn. Die Krafteinheit kann mehrere mechanische Federn wie insbesondere Schraubenfedern umfassen. Jede einzelne Feder ist vorzugsweise lösbar aufgenommen im Kraftspeicher, womit die Gesamt-Kraftwirkung des Kraftspeichers abhängig ist von der Anzahl der Federn.

Der Kraftspeicher ist insbesondere automatisiert wieder ladbar, um den Kraftspeicher nach einem Öffnungsvorgang des Möbelteils unter der Wirkung des Kraftspeichers, der dabei zumindest teilweise entladen wird, wieder in seinen geladenen bzw. gespannten Ausgangszustand zu bringen. Hierfür wird zum Beispiel die kinetische Energie bzw. die Bewegung des sich schließenden Möbelteils genutzt. Das Schließen des Möbels ist für einen Nutzer häufig mit weniger Kraftanstrengung möglich, so dass der zum Laden des Kraftspeichers zusätzlich nötige Aufwand nicht relevant ist. Bei Türen oder Klappen kann beim Schließen des Möbelteils gegebenenfalls die schwerkraftunterstützte Schließbewegung dazu beitragen, dass der entladene Kraftspeicher wieder geladen wird.

Das Öffnen des relativ zum Möbelkorpus geschlossen positionierten Möbelteils wird zum Beispiel mit einer Tipmatic- bzw. einer Touch/Latch-Funktionalität ausgelöst. Das Auslösen der Öffnungsbewegung des geschlossenen ruhenden Möbelteils erfolgt durch Einwirken von außen auf das bewegbare Möbelteil durch einen Nutzer. Dabei drückt der Nutzer auf das Möbelteil, womit dieses um einen geringen Weg in Schließrichtung bewegt wird und damit ein Auslösevorgang erfolgt. Mit dem Auslösevorgang wird die zuvor festgehaltene bzw. arretierte Schließstellung das bewegbaren Möbelteils aufgehoben. Der Nutzer lässt dann vom Möbelteil ab, so dass selbsttätig das Möbelteil unter Umkehr der Bewegungsrichtung aus der Schließstellung herausbewegt wird, was mit Hilfe des geladenen Kraftspeichers über z. B. ein Öffnungselement erfolgt. Das Möbelteil wird hierbei zumindest über eine Teilstrecke der gesamten möglichen Öffnungsstrecke in Öffnungsrichtung bewegt. Der Nutzer kann das Möbelteil manuell ggf. noch weiter in Öffnungsrichtung bewegen.

Vorzugsweise ist bei der erfindungsgemäßen Vorrichtung außerdem ein Schließsystem derart realisiert, dass das bewegbare Möbelteil auf einer letzten Teilstrecke der Schließbewegung unter der Wirkung einer anderen Kraftquelle sanft in eine insbesondere vollständig geschlossene Position gezogen wird. Die Schließbewegung des Möbelteils kann zusätzlich gedämpft erfolgen, wenn die Vorrichtung bzw. das darin integrierte Schließsystem eine Dämpfvorrichtung umfasst.

Die Einstellmittel dienen insbesondere zur angepassten Einstellung des Kraftspeichers beziehungsweise z. B. einer Federvorspannung und damit der Wirkung des Kraftspeichers auf das bewegbare Möbelteil. Denn je nach Einstellung bzw. Vorspannung des Kraftspeichers, ist eine jeweilige bzw. dazugehörige Kraftwirkung des Kraftspeichers eingerichtet. Die Einstellung erfolgt in der Regel einmalig für ein jeweiliges Möbelteil mit dem Lagerteil bzw. dessen Stellposition an der Vorrichtung. Bei einem Federpaket kann zum Beispiel ein Ende des Federpakets mit dem Möbelteil zusammenwirkend gekoppelt sein. Das andere Ende des Kraftspeichers greift an dem Lagerteil an, womit dessen Stellposition die Vorspannung z. B. des Federpakets vorgibt.

Wenn mit den Einstellmitteln die Position des Lagerteils verändert wird, wird auch die Vorspannung des Federpakets verändert. Dies ist möglich, wenn das dem Möbelteil zugeordnete Ende des Federpakets festgehalten ist. Ein Verstellen des Lagerteils weg vom anderen Ende des Federpakets bedingt eine Verlängerung der Federpakets und damit zu einer größeren Vorspannung im geladenen Zustand. Ein Verstellen des Lagerteils hin zum anderen Ende des Federpakets bedingt eine Verkürzung der Federpakets und damit zu einer geringeren Vorspannung im geladenen Zustand des Kraftspeichers. Eine größere Vorspannung im Ausgangszustand bedeutet eine größere Kraftwirkung des Kraftspeichers, wenn der Schließzustand des Möbelteils gelöst wird. Damit kann ein größeres bzw.

schwereres Möbelteil gleichartig geöffnet bzw. ausgestoßen werden wie ein leichteres Möbelteil. Bei einem leichteren Möbelteil wird idealerweise eine geringere Vorspannung des Kraftspeichers eingestellt, was eine geringere Kraftwirkung des Kraftspeichers bedeutet.

Mit den beiden getrennten Führungsbereichen kann eine präzise Positionierung des Eingreifabschnitts und damit des Lagerteils vorgenommen werden. Der Eingreifabschnitt umfasst vorzugsweise ein am Lagerteil positionsfestes vorstehendes Eingreifelement. Das Eingreifelement kann verschiedene Formen aufweisen, insbesondere länglich z.B. stiftartig oder zapfenartig.

Die beiden Führungsbereiche, die beispielsweise in Bauteilabschnitten vorhanden sind, die zueinander vorzugsweise flächig parallel ausgerichtet sind, überlappen sich zum Beispiel in einem Bereich, der in der Größe bzw. Form an den Eingreifabschnitt angepasst ist. Bevorzugt ist der Eingreifabschnitt ohne merkliches Spiel mit den beiden Führungsbereichen in seiner Position definiert. Durch die benachbarte Überlagerung der beiden voneinander getrennten Führungsbereiche ergibt sich dann ein in Eingreifrichtung des Eingreifabschnitts betrachteter Überschneidungsbereich. Der Eingreifabschnitt ist im aufgenommenen Zustand in den sich überlagernden Teilen der beiden Führungsbereiche gefangen. Dabei ist der Eingreifabschnitt mit einem ersten Außenabschnitt anliegend an einem Führungsbereich, zum Beispiel einer Randkontur, und mit einem zweiten Außenabschnitt, der versetzt zum ersten Außenabschnitt am Eingreifabschnitt vorhanden ist, anliegend an dem anderen Führungsbereich.

Es ist überdies vorteilhaft, dass ein Führungsbereich positionsfest ist. Vorzugsweise ist genau ein Führungsbereich positionsfest und der andere Führungsbereich bewegbar beziehungsweise in unterschiedliche Verstellpositionen bringbar. Die beiden Führungsbereiche sind für sich betrachtet vorzugsweise jeweils größer als es für das Eingreifen des Eingreifabschnitts nötig wäre. Der positionsfeste Führungsbereich gibt zum Beispiel mit seiner Form bzw. Kontur zwei oder mehrere vorgegebene Stellungen des Eingreifabschnitts vor. Diese Stellungen können dann wiederholend und exakt positionsgleich eingerichtet werden, so dass entsprechend die jeweils identischen Vorspannungen des Kraftspeichers einrichtbar sind. Mit dem positionsfesten Führungsbereich wird vorzugsweise im Wesentlichen ein Bewegungsweg des Lagerteils vorgegeben. Damit kann zum Beispiel ein Federpaket, das am Lagerteil angreift, entlang des positionsfesten Führungsbereichs verlängert oder verkürzt und damit eine Vorspannung vergrößert oder verringert werden. Der positionsfeste Führungsbereich ist zum Beispiel eine gerade und/oder gekrümmte Führungsbahn mit zwei oder mehr Stell- bzw. Rastpositionen, in denen der Eingreifabschnitt jeweils arretierbar ist. Vorzugsweise wirkt die Kraft des Kraftspeichers dabei so, dass der Eingreifabschnitt kraftunterstützt in der Rastposition verbleibt. Dies sichert ein Verbleib des Eingreifabschnitts in der Rastposition.

Gemäß einer vorteilhaften Ausbildung der Erfindung, ist genau ein Führungsbereich bewegbar. Der andere Führungsbereich ist dann positionsfest an der Vorrichtung. Damit wird für die veränderliche Vorgabe der Relativstellung der beiden Führungsbereiche eine vergleichsweise einfache Ausgestaltung erreicht. Die Konstruktion genau eines bewegbaren Führungsbereiche ist gegenüber zwei bewegbaren Führungsbereichen weniger aufwändig und komplex. Der andere positionsfeste Führungsbereich ist vorteilhafterweise mit einem geringeren Konstruktionsaufwand verbunden. Der eine bewegbare Führungsbereich kann beispielsweise durch ein Bauteil realisiert sein, das reversibel hin- und herbewegbar bzw. rotatorisch, schwenkbar, drehbar und/oder linear bewegbar bzw. verschiebbar ist.

Vorteilhafterweise ist der genau eine bewegbare Führungsbereich von außen bedienbar, insbesondere manuell von einer Person bewegbar. Hierfür kann ein Bedienabschnitt an dem betreffenden Bauteil vorhanden sein, welcher im montierten Zustand der Vorrichtung am Möbel erreichbar ist.

Alternativ ist es möglich, dass die zwei Führungsbereiche jeweils bewegbar relativ zueinander verstellbar sind.

Nach einer Abwandlung der Erfindung umfasst der Führungsbereich eine Führungskontur. Die Führungskontur gibt eine Bewegungsbahn für den Eingreifabschnitt bei einer Veränderung der Relativstellung der beiden Führungsbereiche zueinander vor.

Die Bewegungsbahn für den Eingreifabschnitt ist in der Regel sowohl durch Abschnitte einer Führungskontur des einen als auch durch Abschnitte einer Führungskontur des anderen Führungsbereichs gebildet. Vorzugsweise umfasst die Führungskontur unterschiedlich geformte Abschnitte. Der positionsfeste Führungsbereich ist vorzugsweise durch eine Führungskontur mit einer Erstreckung in Längsrichtung der Kraftwirkung der Krafteinheit bzw. der einzelnen Federn gebildet. Der längliche Führungsbereich umfasst zusätzlich seitliche Ausbuchtungen für den Eingreifabschnitt zur Vorgabe von zwei oder mehr Stufen der Verstellung.

Insbesondere ist an einem Führungsbereich oder an beiden Führungsbereichen vorzugsweise eine Kulissenführung realisiert.

Die Führungsbereiche umfassen insbesondere Freilassungen bzw. materialfreie Bereiche in flachen ebenen Bauteilabschnitten. Demgemäß sind vorzugsweise die beiden Führungsbereiche an jeweils einem flachen ebenen Bauteileabschnitt gebildet. Ein Bauteilabschnitt ist vorzugsweise positionsfest und der andere ist schwenkbar. Die beiden flachen Bauteilabschnitte lassen sich platzsparend unmittelbar benachbart oder mit geringem Abstand nebeneinander positionieren. Das Lagerteil kann derart vorgesehen werden, dass der Eingreifabschnitt quer zur jeweiligen Ebene der Freilassungen ausgerichtet in beide Führungsbereiche eingreift bzw. von z. B. einer Seite in die beiden Freilassungen vorsteht. Die Ebenen der Freilassungen sind vorzugsweise parallel. Die Ausgestaltung der Führungsbereiche in flachen parallelen Bauteilabschnitten ermöglicht damit eine sehr platzsparende Konstruktion. Insbesondere ist auch das Lagerteil benachbart zu einem der beiden Bauteile mit den Führungsbereichen positioniert sein.

Nach einer vorteilhaften Variante der Erfindung ist ein Führungsbereich als Führungsvertiefung und/oder als materialfreie Öffnung gestaltet. Beispielsweise ist es von Vorteil, dass ein erster und ein zweiter Führungsbereich durch eine lochartige Öffnung gebildet ist. Der zweite Führungsbereich kann gegebenenfalls als nutartige Vertiefung gestaltet sein. Der benachbart zum ersten Führungsbereich vorhandene Eingreifabschnitt am Lagerteil, reicht mit einem Abschnitt durch den ersten Führungsbereich komplett durch und greift mit einem weiteren Abschnitt in den zweiten Führungsbereich hinein. Vorzugsweise ist der erste Führungsbereich bewegbar und der zweite Führungsbereich positionsfest.

Die materialfreie Öffnung des betreffenden Führungsbereichs kann zum Beispiel schlitzartig bzw. als Langloch ausgebildet sein.

Vorzugsweise weist jeder Führungsbereich eine Führungskontur auf, zum Beispiel mit einer Führungsfläche oder einer Führungslinie wie einer Randkontur, an welcher jeweils zugehörige Abschnitte des Eingreifabschnitts bei einer Relativbewegung der beiden Führungsbereiche bzw. bei einer Verstellung des Lagerteils sich geführt entlangbewegen.

Die Führungskontur kann beispielsweise eine Randkontur, eine Absatzkontur, eine Führungsfläche und/oder eine Führungsvertiefung sein.

Die Führungskontur am Führungsbereich, also der Bereich, der bei der Relativbewegung der Führungsbereiche in Kontakt mit dem Eingreifabschnitt gelangt, indem der Eingreifabschnitt in dem betreffenden Führungsbereich eingreift, ist demgemäß auf unterschiedliche Weise ausbildbar.

Beispielsweise ist die Führungskontur über ihre Erstreckung durchgehend bzw. ununterbrochen oder durch zwei oder mehr unterbrochene Teilabschnitte gebildet.

Es ist auch von Vorteil, dass ein Führungsbereich an einem bewegbar an der Vorrichtung vorhandenen Stellteil ausgebildet ist, insbesondere an einem schwenkbar an der Vorrichtung vorhandenen Schwenkteil. Das Stellteil ist vorzugsweise mit einer Hebelfunktion zum Beispiel als Hebelelement ausgebildet. Das Stellteil ist beispielsweise verschieblich bzw. mit einer Schiebelagerung oder vorzugsweise mit einer Schwenklagerung gelagert. Das Stellteil kann als flaches Blech- oder Kunststoffteil vorteilhafterweise platzsparend an der Vorrichtung aufgenommen sein. Eine Schwenklagerung ermöglicht zudem eine einfache Bedienung durch eine Person, indem zum Beispiel an dem Schwenkteil ein Bedienabschnitt für das manuelle Hin- und Herschwenken des Schwenkteils ausgestaltet ist. Mit dem Schwenken wird die Relativbewegung der Führungsbereiche zueinander realisiert.

Der Führungsbereich am Schwenkteil weist insbesondere Kontaktabschnitte auf, welche in Kontakt mit dem Eingreifabschnitt gelangen, um die Position des Eingreifabschnitts bzw. des Lagerteils vorzugeben.

Die Kontaktabschnitte können eine gebogene Umrandung einer Öffnung in dem Schwenkteil umfassen, durch welche der Eingreifabschnitt durchgreift, und dazu weitere Abschnitte, zum Beispiel Abschnitte eines erhöht zu einem Flachabschnitt des Schwenkteils vorhandenen Absatzes. In dem Flachteil ist vorzugsweise die Öffnung mit einem ersten Abschnitt des Führungsbereichs und am Absatz ein zweiter Abschnitt des Führungsbereichs ausgebildet. Der erste Abschnitt dient im Kontakt mit dem Eingreifabschnitt vorzugsweise zum Spannen bzw. zur Erhöhung einer Vorspannung des Kraftspeichers und der zweite Abschnitt dient zum Lösen bzw. zum Verringern der Vorspannung des Kraftspeichers. Dies bedeutet, dass in eine Schwenkrichtung der erste Abschnitt in führende Anlage am Eingreifabschnitt kommt und in die andere Schwenkrichtung der zweite Abschnitt. Mit der Anlage des jeweiligen Abschnitts wirkt eine Kraft bzw. ein Moment auf den Eingreifabschnitt und damit auf das Lagerteil, so dass die Verstellung möglich ist. Die dazu nötige Kraft insbesondere zur Erhöhung der Vorspannung wird demgemäß durch die Person aufgebracht, welche das Stellteil bedient.

Auch ist es vorteilhaft, dass die Führungsbereiche aufeinander derart abgestimmt sind, um eine mehrstufige Verstellung des Lagerteils vorzunehmen. Damit können insbesondere zwei oder mehr unterschiedliche Wirkzustände des Kraftspeichers vorgegeben werden. Vorteilhaft ist der Kraftspeicher für unterschiedliche Möbelteile universell nutzbar. Dies erfolgt mit der Verstellung des Lagerteils. Die verschiedenen Verstellzustände unterscheiden sich in der Kraftwirkung des Kraftspeichers auf das bewegbare Möbelteil. Die Vorgabe der jeweiligen vorgegebenen Stufen der Verstellung ist insbesondere durch Erfahrungswerte bzw. durch die möglichen Variationen in der Größe und/oder Ausbildung des bewegbaren Möbelteils bestimmt. Bei größeren bewegbaren Möbelteilen oder bei Verwendung von Materialien mit einem höheren Gewicht für das bewegbare Möbelteil wird die Vorspannung des Kraftspeichers erhöht, indem das Lagerteil entsprechend verstellt wird. Wenn der Kraftspeicher ein Federpaket mit Kraftfedern aufweist, werden die Kraftfedern zum Beispiel gelängt bzw. stärker gespannt. Hierfür wird das Lagerteil von einer zum Beispiel voreingestellten Grundstellung in eine erste Verstellstufe verstellt.

Die Verstellstufen können durch einen Arretier- bzw. einen Verrastmechanismus gesichert sein.

Alternativ ist jedoch auch eine stufenlose Verstellung des Lagerteils einrichtbar. Auf diese Weise lässt sich auch die Vorspannung des Kraftspeichers stufenlos vorgeben bzw. erhöhen oder verringern.

Nach einer vorteilhaften Abwandlung der Erfindung ist an einem bewegbar gelagerten Bauteil ein Führungsbereich vorhanden, welcher getrennte Kontaktabschnitte zur Kontaktierung mit dem Eingreifabschnitt am Lagerteil umfasst. Das Bauteil ist insbesondere das Stellteil bzw. das Schwenkteil. Die Kontaktabschnitte können einen schmalen Rand einer Öffnung bzw. eines Lochs in dem Stellteil aufweisen, entlang dem der Eingreifabschnitt geführt verstellbar ist, wenn das Stellteil bewegt wird. Ein dazu getrennter weiterer Kontaktabschnitt am Stellteil kann eine Kontur an einer Erhebung oder einem Absatz umfassen.

Weiter ist es vom Vorteil, dass an einem bewegbar gelagerten Bauteil ein Führungsbereich vorhanden ist, wobei ein erster Kontaktabschnitt zur Kontaktierung mit dem Eingreifabschnitt am Lagerteil für die Erhöhung einer Vorspannung des Kraftspeichers ausgebildet ist und ein zweiter Kontaktabschnitt zur Kontaktierung mit dem Eingreifabschnitt am Lagerteil für die Verringerung der Vorspannung des Kraftspeichers ausgebildet ist. Dies ist im Hinblick auf eine kompakte und verschleißarme Anordnung vorteilhaft. Insbesondere kann der erste Kontaktabschnitt im Vergleich zum anderen Kontaktabschnitt in einer anderen Ebene am bewegbar gelagerten Bauteil liegen.

Eine vorteilhafte Ausbildung der Erfindung ist dadurch charakterisiert, dass das Lagerteil an der Vorrichtung mit dem Eingreifabschnitt geführt verstellbar ist, wobei das Lagerteil über eine Hilfsführung mit einem Hilfs-Eingreifabschnitt an der Vorrichtung geführt ist. Die Hilfsführung dient für eine verbesserte beziehungsweise zusätzliche Führung bei einer Verstellung des Kraftspeichers. Damit wird eine ruckfreie Verstellung erreicht. Die Hilfsführung umfasst zum Beispiel einen zum Eingreifabschnitt weiteren Abschnitt, der z. B. am Lagerteil vorsteht und in eine dazu passende Hilfsführungsbahn eingreift und darin z. B. seitlich geführt hin- und herbewegbar ist, wenn das Lagerteil verstellt wird.

Auch ist es von Vorteil, dass die Einstellmittel derart abgestimmt sind, dass eine selbstsichernde Verstellposition des Lagerteils an der Vorrichtung unter der Wirkung des Kraftspeichers eingerichtet ist. Damit bleibt eine eingestellte Verstellposition so lange sicher erhalten, bis eine gewollte Verstellung des Lagerteils erfolgt.

Die Erfindung betrifft außerdem ein Möbel mit einem Möbelkorpus, an dem ein Möbelteil über Führungsmittel für eine geführte Bewegung in eine Öffnungsrichtung und in eine der Öffnungsrichtung entgegengesetzte Schließrichtung bewegbar ist, wobei die Führungsmittel eine Vorrichtung gemäß einer der oben erläuterten Ausbildungen umfasst.

Damit werden die genannten Vorteile an dem Möbel insbesondere an einem Möbel mit einer Schublade oder einer Oberklappe oder einer Schwenktür erzielt. Die Vorrichtung ist vorzugsweise als ein flaches Beschlag-Bauteil realisiert, das man zum Beispiel an einer Unterseite eines Schubladenbodens anbringt, wobei ein vom Kraftspeicher beaufschlagtes versetzbares Öffnungselement des Beschlags wie ein Auswerfer bei einem Öffnungsvorgang an einem Gegenabschnitt anstößt. Der Kraftspeicher unterstützt die Öffnungsbewegung des Öffnungselements bei dessen Öffnungsvorgang. Zum Beispiel wirkt das vorgespannte Federpaket auf das Öffnungselement bei dessen Versetzbewegung derart, dass das Öffnungselement an dem Gegenabschnitt anstößt und damit die Schublade in deren Öffnungsrichtung aus der geschlossenen Stellung am Möbelkorpus herausbewegt wird.

### Beschreibung der Ausführungsbeispiele

Weitere Merkmale und Vorteile der Erfindung sind anhand von in den Figuren schematisiert dargestellten Ausführungsbeispielen näher erläutert.

Im Einzelnen zeigt:
- Figur 1: ein erfindungsgemäßes Möbel perspektivisch von schräg oben mit einer Schublade im vollständig geöffneten Zustand an einem Möbelkorpus,
- Figur 2: eine erfindungsgemäße Vorrichtung ohne ein Abdeckbauteil in Explosionsdarstellung,
- Figur 3 bis Figur 8: die Vorrichtung gemäß Figur 2 im zusammengesetzten Zustand in einer Aufsicht einer ersten Hauptseite in unterschiedlichen Betriebszuständen,
- Figur 9: die Vorrichtung gemäß Figur 5 mit dem Abdeckbauteil perspektivisch schräg von unten mit Blick auf eine zweite Hauptseite der Vorrichtung.
- Figur 10: einen Ausschnitt der Grundplatte mit zwei Führungsbahnen,
- Figur 11: ein Stellteil in Draufsicht, das im Bereich des in Figur 8 gezeigten Ausschnitts der Grundplatte angeordnet ist,
- Figur 12: ein Lagerteil eines Kraftspeichers und
- Figur 13 bis Figur 22: schematisiert einen Ausschnitt der Auswerfereinheit in Draufsicht mit den beiden Führungsbahnen, dem Stellteil und dem Lagerteil in unterschiedlichen Verstellpositionen.

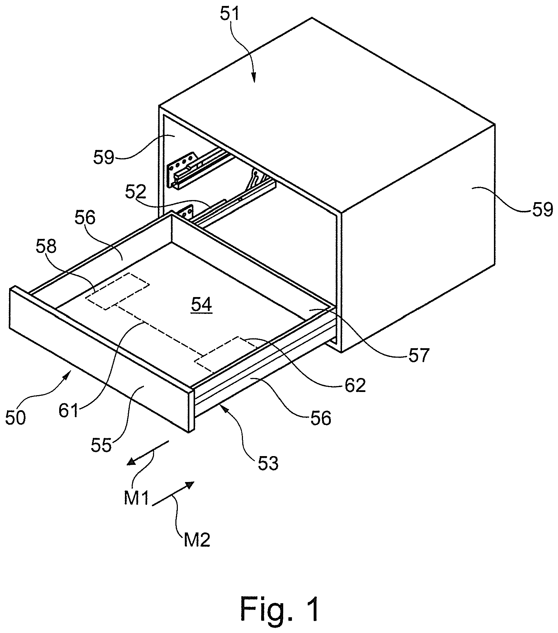

Ein erfindungsgemäßes Möbel 50 mit einem kastenförmigen Möbelkorpus 51 und einer über Führungsmittel 52 beweglich geführten Schublade 53 ist in Figur 1 dargestellt. Die Schublade 53 umfasst einen Schubladenboden 54, eine Schubladenfront 55, Seitenwände 56 und eine Schubladenrückwand 57. Für die Führung der Schublade 53 sind zwei gleichwirkende Führungsmittel 52 jeweils zwischen jeder Seitenwand 56 der Schublade 53 und einer dazugehörigen Korpusseitenwand 59 vorhanden. An einer Unterseite des Schubladenbodens 54 ist eine erfindungsgemäße Vorrichtung 58 (gestrichelt dargestellt) zum Bewegen bzw. Auswerfen des als Schublade 53 ausgebildeten Möbelteils in Öffnungsrichtung M1 angeordnet.

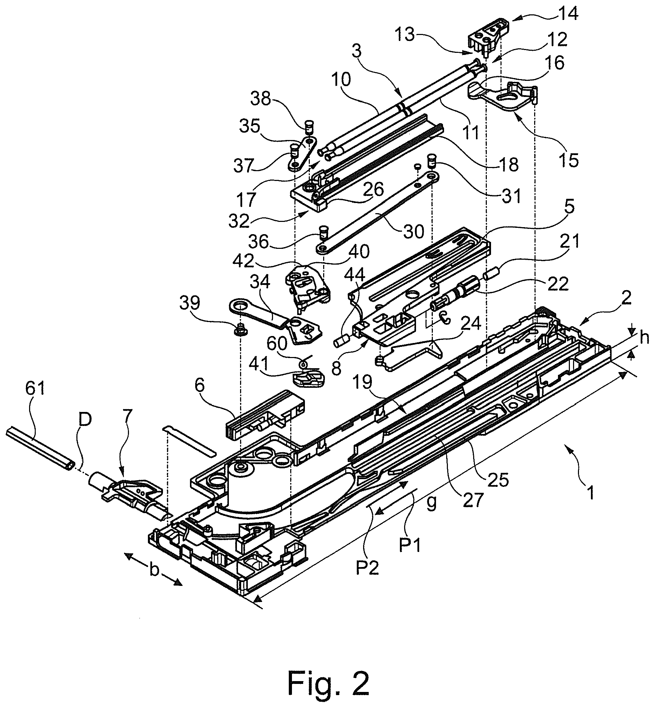

Figur 2 zeigt die Explosionsdarstellung der Vorrichtung 58, welche als Auswerfereinheit 1 für die Schublade 53 ausgebildet ist.

Die Auswerfereinheit 1 dient zum kraftunterstützten Auswerfen der Schublade 53 über eine erste Teilstrecke der Öffnungsbewegung der Schublade 53 aus einer geschlossenen Stellung relativ zum Möbelkorpus 51 in die Öffnungsrichtung M1 der Schublade 53.

Die Schublade 53 ist über die Führungsmittel 52, beispielsweise zwei gleichartige Teil- oder Vollauszüge, am Möbelkorpus 51 in Richtung M1 und M2 verschiebbar gelagert. Die Auswerfereinheit 1 kann alternativ am Möbelkorpus 51 oder an den Führungsmitteln 52 des Möbels 50 angeordnet sein.

Die Auswerfereinheit 1 umfasst unter anderem eine Grundplatte 2, einen Kraftspeicher 3, eine Kopplungseinrichtung 4, einen Auswerfer 5, einen Auslöser 6 und ein Verriegelungsorgan 7.

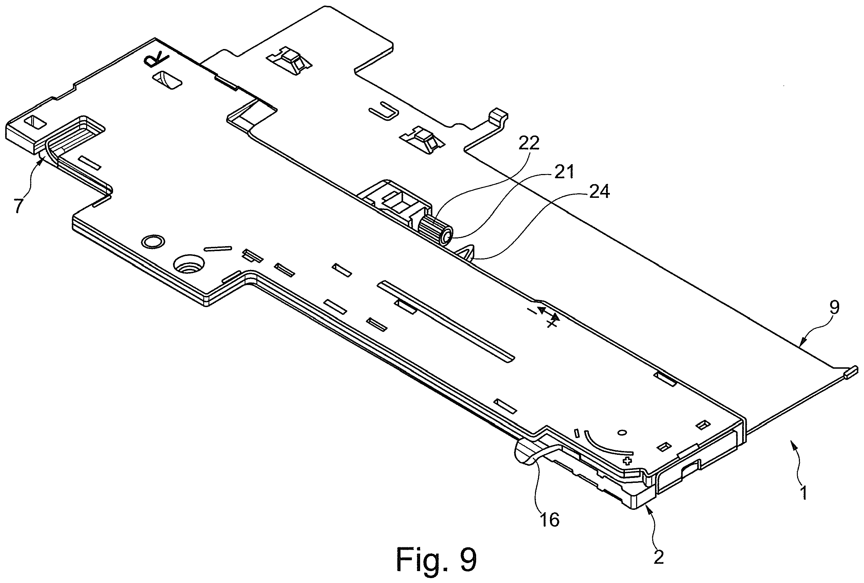

Ein Gehäuse der Auswerfereinheit 1 umfasst die Grundplatte 2 und ein Abdeckbauteil 9, welches aus Figur 9 ersichtlich ist. Die Auswerfereinheit 1 kann über das Gehäuse bzw. über das Abdeckbauteil 9 und/oder die Grundplatte 2 an der Unterseite des Schubladenbodens 54 und/oder an den Führungsmitteln 52 angeordnet sein.

An der Grundplatte 2 sind Halteabschnitte, Führungskonturen, Anschlagsorgane und/oder Aufnahmeabschnitte zur Anbindung der einzelnen Komponenten der Auswerfereinheit 1 ausgebildet. Die Grundplatte 2 ist im Wesentlichen als rechteckiges, längliches bzw. streifenförmiges Bauteil mit einer vergleichsweise geringen Höhe h von zum Beispiel zirka 5 bis 15 Millimeter ausgestaltet. Die Grundplatte 2 weist des Weiteren eine Breite b von zirka 4 bis 10 Zentimeter und eine Länge g auf.

Der Kraftspeicher 3 umfasst gemäß des gezeigten Ausführungsbeispiels zwei parallel angeordnete gleichartige Spiralfedern 10, 11, die ein Federpaket ausbilden. An einem ersten Ende 12 des Kraftspeichers 3 sind die Spiralfedern 10, 11 an einem einstellbaren Festlager 13 angeordnet. Das Festlager 13 umfasst ein bewegbares Lagerteil 14, an welchem die Spiralfedern 10, 11 lösbar aber fest aufgenommen sind und ein Stellteil 15 mit einem Bedienabschnitt 16, über welchen ein Nutzer von außen eine Position des Endes 12 des Kraftspeichers 3 veränderlich positionsfest einstellen kann. Hierdurch kann vorteilhaft eine Kraftwirkung des Kraftspeichers 3 auf die Schublade 53 beim Öffnungsvorgang der Schublade 53 voreingestellt werden.

An einem zweiten Ende 17 des Kraftspeichers 3 sind die dazugehörigen Enden der Spiralfedern 10, 11 an einem schlittenartigen Bewegungselement 18 befestigt. Das schlittenartige Bewegungselement 18 ist über eine dazugehörige Führungskontur 19 an der Grundplatte 2 beweglich in eine Bewegungsrichtung P1 und eine entgegengesetzte Bewegungsrichtung P2 linear geführt.

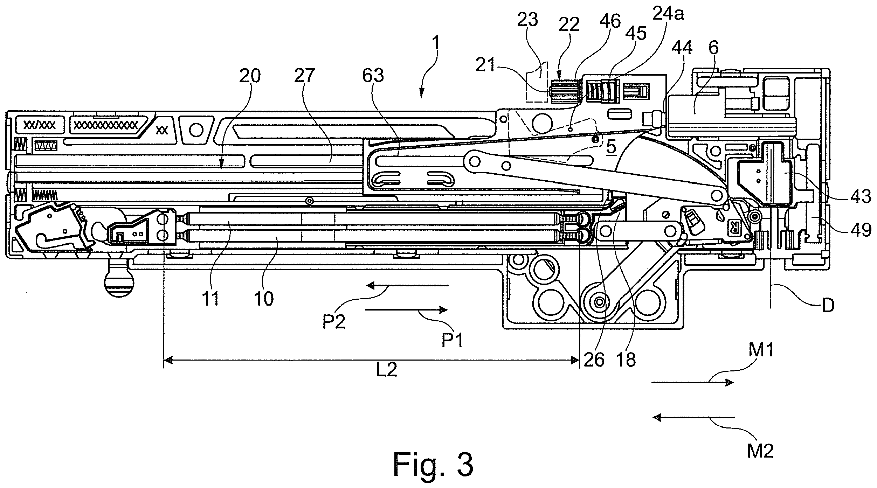

Die Bewegungsrichtungen P1 und P2 des Bewegungselements 18 (s. Figuren 2, 3) verlaufen parallel zu der Öffnungsrichtung M1 der Schublade 53 und einer dazu entgegengesetzten Schließrichtung M2.

Ist die Auswerfereinheit 1 positionsfest am Möbelkorpus 51 und/oder an einem stationären Teil der Führungsmittel 52 angeordnet, entspricht die Öffnungsrichtung der Schublade 53 der Richtung P1 und die Schließrichtung der Schublade 53 der Richtung P2.

Im Weiteren wird von einem Montagezustand der Auswerfereinheit 1 am Schubladenboden 54 ausgegangen.

Die Figuren 3, 7, 8 zeigen die Auswerfereinheit 1 in einem Spannzustand des Kraftspeichers 3, in welchem die Spiralfedern 10, 11 gelängt bzw. auf Zug beansprucht gespannt sind, hierbei ist das Bewegungselement 18 gegenüber einer in Richtung P2 zurückgezogenen Stellung an der Grundplatte 2 in Richtung P1 versetzt und in einer Spannposition festgehalten.

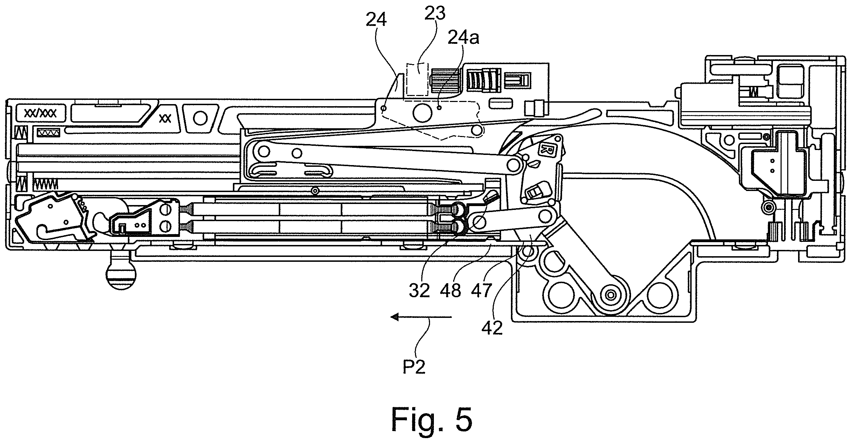

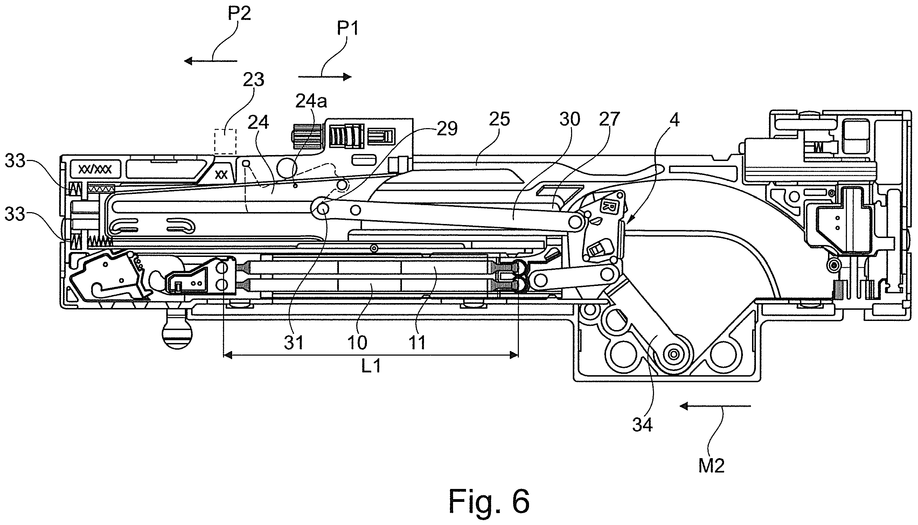

Die Figuren 5, 6 zeigen die Auswerfereinheit 1 in einem entladenen Grundzustand des Kraftspeichers 3, in welchem die Spiralfedern 10, 11 weiterhin auf Zug, jedoch mit einem geringeren Betrag, vorgespannt sind und eine Länge L1 aufweisen.

Im Spannzustand des Kraftspeichers 3 weisen die Spiralfedern 10, 11 eine Länge L2 auf, welche größer als L1 ist.

Am Bewegungselement 18 ist ein Halteorgan 32 mit einem Anschlagselement 26 vorhanden.

Über die Kopplungseinrichtung 4 steht der Kraftspeicher 3 bzw. das Bewegungselement 18 vorzugsweise ausschließlich beim Schließvorgang der Schublade 53 in Wirkverbindung mit dem Auswerfer 5. Der Auswerfer 5 ist insbesondere ausschließlich linear bewegbar bzw. parallel zur Bewegungsrichtung des Bewegungselements 18 in die Richtungen P1 und P2 hin- und her bewegbar. Hierfür ist eine Linearführung 20 an der Grundplatte 2 ausgebildet, welche auf Führungsabschnitte z. B. auf einer Seite des Auswerfers 5 abgestimmt ist.

Ein von der Auswerfereinheit 1 bewirkter Öffnungsvorgang der Schublade 53 findet ausschließlich über eine direkte Wirkverbindung des Kraftspeichers 3 über das sich in Richtung P2 bewegende Bewegungselement 18 auf den Auswerfer 5 statt.

Hierfür ist am Bewegungselement 18 das Anschlagselement 26 ausgebildet, welches vorteilhaft elastisch ausgestaltet ist und damit ein für einen Nutzer störendes Geräusch beim Auftreffen des Bewegungselements 18 auf den Auswerfer 5 im Öffnungsvorgang der Schublade 53 verhindert oder zumindest dämpft (Figur 3, 4, 5).

Eine Frontspalt-Einstellanordnung 8, welche am Auswerfer 5 ausgebildet ist, umfasst ein Gehäuse 45 und eine Stellschraube 22 mit einem Kontaktabschnitt 21. Die Stellschraube 22 weist ein Außengewinde auf, welches mit einem Innengewinde am Gehäuse 45 zusammenwirkt. Durch manuelles Drehen eines Bedienabschnitts 46 der Stellschraube 22 durch einen Nutzer ist abhängig von der Drehrichtung eine Position des Kontaktabschnitts 21 der Stellschraube 22 in Richtung P1 oder P2 verstellbar. Die Stellschraube 22 ist insbesondere selbsthemmend relativ zum Gehäuse 45 ausgebildet. Durch die Positionsvorgabe der Stellschraube 22 ist ein Maß eines Frontspalts zwischen der Schubladenfront 55 der am Möbelkorpus 51 geschlossenen Schublade 53 und Stirnseiten des Möbelkorpus 51 vorgebbar.

Der Kontaktabschnitt 21 der Stellschraube 22 steht im gespannten bzw. geladenen Zustand des Kraftspeichers 3 an einem Mitnehmer 23 an, welcher in entsprechenden Betriebszuständen einen Anschlag für den Kontaktabschnitt 21 bildet. Der in den Figuren 3 bis 8 lediglich gestrichelt angedeutete Mitnehmer 23 kann zum Beispiel an einer Festschiene der Führungsmittel 52 vorhanden sein oder am Möbelkorpus 51 angebracht sein, wenn die Auswerfereinheit 1 an der Schublade 53 angeordnet ist.

Ist die Auswerfereinheit 1 hingegen am Möbelkorpus 51 oder an einem positionsfesten Teil der Führungsmittel 52 des Möbels 50 angeordnet, so kann der Mitnehmer 23 an der Schublade 53 und damit beweglich zum Möbelkorpus 51 vorhanden sein.

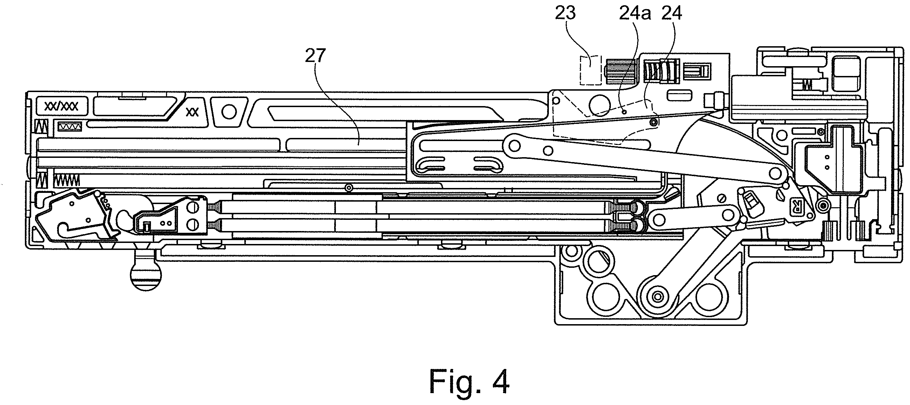

Wird ausgehend von der Grundstellung der Auswerfereinheit 1 gemäß Figur 3 eine Arretierung an der Auswerfereinheit 1 aufgehoben, was Figur 4 zeigt und weiter unten noch näher erklärt ist, zieht der gespannte bzw. geladene Kraftspeicher 3 das Bewegungselement 18 in Richtung P2, das über das Anschlagselement 26 den Auswerfer 5 in Richtung P2 relativ zur Grundplatte 2 drückt bzw. schiebt.

Sobald sich der Auswerfer 5 an der Grundplatte 2 in Richtung P2 bewegt, wird ein schwenkbar am Auswerfer 5 gelagertes Klinkenbauteil 24 der Auswerfereinheit 1 aus einer zu einem Außenrand der Grundplatte 2 vollständig versenkten Einschwenkstellung gemäß Figur 4 in eine mit einer Nase teilweise über den Außenrand der Grundplatte 2 vorstehende Ausschwenkstellung gebracht (Figur 5), was über eine schleifenförmig geschlossenen Führungsbahn 25 in der Grundplatte 2 und einen darin eingreifenden Führungszapfen 24a am Klinkenbauteil 24 realisiert ist.

Zur Darstellung des Klinkenbauteils 24 ist dessen durch andere Bauteile, insbesondere durch den Auswerfer 5 verdeckter Umriss in den Figuren 3 bis 8 gestrichelt angedeutet.

In dem in Figur 5 dargestellten Grundzustand befindet sich der Kraftspeicher 3 in einer Endstellung des Entladezustands, wobei der Kraftspeicher 3 den Auswerfers 5 nicht weiter in Richtung P2 bewegen kann.

Der Auswerfer 5 wird anschließend aufgrund der Bewegungsenergie der Schublade 53, was bedingt durch die vorausgegangene Auswerfbewegung ist, und/oder durch ein manuelles Weiterbewegen der Schublade 53 in Öffnungsrichtung M1 durch einen Nutzer, in Richtung P2 relativ zur Grundplatte 2 verschoben. Dies ist deshalb möglich, weil das am Auswerfer 5 vorstehend herausgeschwenkte Klinkenbauteil 24 am Mitnehmer 23 anstößt, womit im weiteren Schubladen-Bewegungsverlauf der Auswerfer 5 seine maximal weit in Richtung P2 an der Grundplatte 2 verschobene Endstellung erreicht. Das Klinkenbauteil 24 wird mit Erreichen der Endstellung am Auswerfer 5 wieder vollkommen eingeschwenkt, was durch das Zusammenspiel der Führungsbahn 25 mit dem darin eingreifenden Führungszapfen 24a am Klinkenbauteil 24 vorgegeben ist.

Wird die Schublade 53 nach einem Entladevorgang des Kraftspeichers 3 weiter in Öffnungsrichtung M1 bewegt, trennt sich die Auswerfereinheit 1 vom Mitnehmer 23 und der Kontakt zwischen dem Mitnehmer 23 und dem Kontaktabschnitt 21 der Stellschraube 22 wird aufgehoben (Figur 6).

Aus der oben beschriebenen Endstellung, die der Auswerfer nur kurzzeitig einnimmt, wird der Auswerfer 5 durch Federelemente 33 an der Grundplatte 2 zum Beispiel um wenige Millimeter in Richtung P1 gedrängt. Die Federelemente 33 besitzen gegenüber den Spiralfedern 10, 11 des Kraftspeichers 3 eine vergleichsweise geringe Kraft. Mit der Bewegung des Auswerfers 5 in Richtung P1 durch die Kraft der Federelemente 33 wird ein Anlageabschnitt 29 des Klinkenbauteils 24 in einer Warteposition des Auswerfers 5 in direkten, spielfreien Kontakt mit einem Lagerzapfen 31 eines Spannhebels 30 der Kopplungseinrichtung 4 gebracht (Figur 6). Der Lagerzapfen 31 ist an einem ersten Ende des Spannhebels 30 angeordnet und kann sich entlang einer zum Beispiel linearen Führungsbahn 27 und/oder einer Linearführung 63, welche am Auswerfer 5 ausgebildet ist, so lange frei bewegen, insbesondere innerhalb eines Öffnungsvorgangs der Schublade 53, bis das Klinkenbauteil 24 den Lagerzapfen 31 und/oder den Spannhebel 30 in direkten, spielfreien Kontakt mit dem Auswerfer 5 hält.

Die Warteposition des Auswerfers 5, welche in Figur 6 gezeigt ist, ist auch gleichzeitig eine Startposition des Auswerfers 5 für einen Ladevorgang des Kraftspeichers 3 über die Kopplungseinrichtung 4.

Die Kopplungseinrichtung 4 umfasst neben dem Spannhebel 30, einen Führungshebel 34 und ein Verbindungselement 35. Der Spannhebel 30 ist an einem zweiten Ende über einen Lagerzapfen 36 am Führungshebel 34 angelenkt. Das Verbindungselement 35 ist an einem zweiten Ende über einen zum Lagerzapfen 36 beabstandeten Lagerzapfen 37 ebenfalls am Führungshebel 34 und an seinem ersten Ende über einen weiteren Lagerzapfen 38 am Bewegungselement 18 angelenkt. Der Führungshebel 34 ist an einem ersten Ende über einen Lagerzapfen 39 bewegbar, insbesondere schwenkbar an der Grundplatte 2 angeordnet. Der Lagerzapfen 39 ist vorzugsweise sowohl an der Grundplatte 2 als auch am Abdeckbauteil 9 aufgenommen.

Eine Längsachse A1 des Spannhebels 30, welche durch die Lagerzapfen 31, 36 des Spannhebels 30 verläuft, weist zu einer ersten Längsachse A2 des Führungshebels 34, welche durch die Lagerzapfen 36, 39 verläuft, einen Winkel α auf.

Eine Längsachse A3 des Verbindungselements 35, welche durch die Lagerzapfen 37, 38 des Verbindungselements 35 verläuft, weist zu einer zweiten Längsachse A4 des Führungshebels 34, welche durch die Lagerzapfen 37, 39 verläuft, einen Winkel β auf.

Der Führungshebel 34 der Kopplungseinrichtung 4 umfasst an einem zweiten Ende einen Hebelaufsatz 40. Am Hebelaufsatz 40 sind ein Verriegelungselement 41 und ein Anschlagselement 42 ausgebildet.

Die Endstellung des Entladezustands des Kraftspeichers 3 (Figur 5) wird durch einen Anschlag des Anschlagselements 42 des Führungshebels 34 an einem Wandabschnitt 47 an einer stegartigen Wand 48 der Grundplatte 2 vorgegeben. Der Wandabschnitt 47 wird beispielsweise aus einem ringförmigen Abschnitt eines Dämpfungselements gebildet. Steht das Anschlagselement 42 des Führungshebels 34 nach einem Entladevorgang des Kraftspeichers 3 am Wandabschnitt 47 an, wird aufgrund einer verbleibenden Vorspannung der Spiralfedern 10, 11 eine Zugkraft in Richtung P2 vom Bewegungselement 18 über das Verbindungselement 35 auf den Führungshebel 34 übertragen. Aufgrund der steifen Ausführung der Kopplungseinrichtung 4 bzw. dem Anschlagen des Anschlagselements 42 am Wandabschnitt 47 wird das Bewegungselement 18 an einer weiteren Bewegung in Richtung P2 gehindert, wobei der Kraftspeicher 3 mit dem Bewegungselement 18 spielfrei in der Endstellung des Entladezustands gehalten ist.

Insbesondere das Anschlagselement 42 und/oder der Wandabschnitt 47 können elastisch bzw. dämpfend ausgestaltet sein, womit Anschlagsgeräusch verringert oder verhindert werden.

Der Führungshebel 34 kann beim Spannen des Kraftspeichers 3 aufgrund seiner Ausgestaltung eine Kraft mit einer Übersetzung vom Spannhebel 30 auf das Verbindungselement 35 übertragen.

Das Übersetzungsverhältnis wird zum einen durch das Verhältnis des Abstands der Lagerzapfen 39 und 36 zum Abstand der Lagerzapfen 39 und 37 am Führungshebel 34 gebildet, zum anderen durch die kombinierte kreisförmige und lineare Bewegung des Spannhebels 30 und/oder des Verbindungselement 35 zueinander während des Ladevorgangs des Kraftspeichers 4.

Die Elemente der Kopplungseinrichtung 4 können sich aufgrund ihrer Anordnung an der Auswerfereinheit 1 wie folgt bewegen:
Der Lagerzapfen 31 und somit das erste Ende des Spannhebels 30 kann sich aufgrund seiner Lagerung in der Führungsbahn 27 ausschließlich parallel zu einer Bewegungsrichtung des Auswerfers 5 insbesondere parallel zu einer Bewegungsrichtung des bewegbaren Möbelteils 53 bewegen.

Der Lagerzapfen 38 und somit das ersten Ende des Verbindungselements 35 kann sich aufgrund seiner Lagerung am schlittenartigen Bewegungselement 18 und damit vorteilhaft in der Führungskontur 19 ausschließlich parallel zu einer Bewegungsrichtung des Bewegungselements 18 bzw. des Auswerfers 5, insbesondere parallel zur Bewegungsrichtung des bewegbaren Möbelteils 53 bewegen.

Der Lagerzapfen 36 somit das zweite Ende des Spannhebels 30 kann sich aufgrund seiner Lagerung am zweiten Ende des Führungshebels 34 ausschließlich in einer Kreisbahn um ein Drehzentrum des Lagerzapfens 39 des Führungshebels 34 bewegen.

Der Lagerzapfen 37 des Verbindungselements 35 und somit das zweite Ende des Verbindungselements 35 kann sich aufgrund seiner Lagerung in einem mittleren Bereich des Führungshebels 34 ausschließlich in einer Kreisbahn um ein Drehzentrum des Lagerzapfens 39 des Führungshebels 34 bewegen.

Die Kopplungseinrichtung 4 kann aufgrund der oben genannten Ausgestaltung vorteilhaft eine Kraft zum Spannen des Kraftspeichers 3 vom Auswerfer 5 über den Spannhebel 30 und den Führungshebel 34 auf das Verbindungselement 35 und damit den Kraftspeicher 3 übersetzt übertragen, insbesondere untersetzt die Kopplungseinrichtung 4 die vom Auswerfer 5 ausgeübte Kraft auf den Kraftspeicher 3. Dies bedeutet, dass beim Laden des Kraftspeichers 3 ein Nutzer am Auswerfer 5 eine geringere Kraft aufzubringen hat, als er aufbringen müsste, wenn er den Kraftspeicher 3 ohne eine Untersetzung laden wollte bzw. direkt das Ende 17 des Kraftspeichers 3 in Richtung P1 ziehen würde.

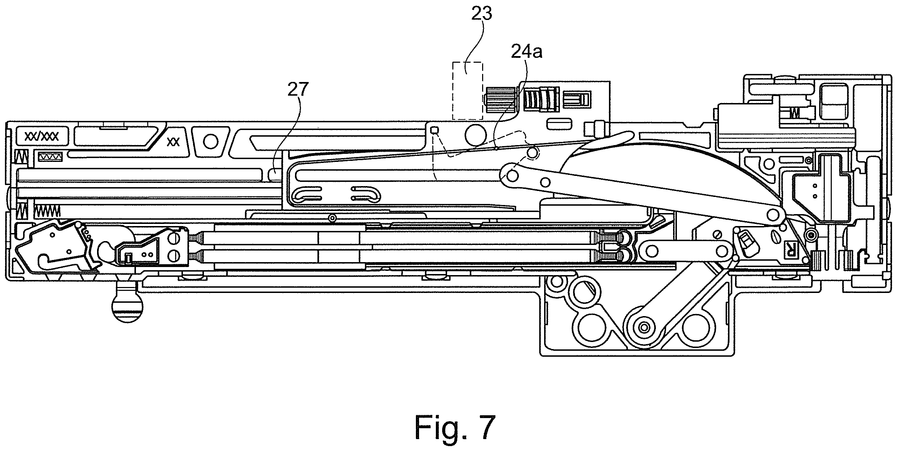

Der Beginn und das Ende des Ladevorgangs des Kraftspeichers 3 bzw. der Spiralfedern 10 und 11 sind in den Figuren 6 und 7 veranschaulicht.

Das Spannen des Kraftspeichers 3 erfolgt mit einer Bewegung der Schublade 53 beim Schließen bzw. auf einer Teilstrecke der Schließbewegung der Schublade 53. Die Startstellung der Auswerfereinheit 1, in welcher diese zum Spannen des Kraftspeichers 3 vorbereitet ist und auf einen Schließvorgang der Schublade wartet, zeigt Figur 6.

Wird die Schublade 53, beispielsweise durch einen Nutzer von außen geschlossen, bewegt sich die Auswerfereinheit 1 in Richtung M2 auf den Mitnehmer 23 zu. Mit dem Anschlagen des Kontaktabschnitts 21 der Stellschraube 22 des Auswerfers 5 am Mitnehmer 23 beginnt der Ladevorgang des Kraftspeichers 3. Beispielsweise aufgrund der Masseträgheit der Schublade 53 relativ zur Grundplatte 2 wird der Auswerfer 5 durch Anschlagen am Mitnehmer 23 in Richtung P1 bewegt.

Durch die Kopplung des Auswerfers 5 über die Kopplungseinrichtung 4 mit dem Kraftspeicher 3 wird dabei das Bewegungselement 18 des Kraftspeichers 3 ebenfalls in Richtung P1 relativ zur Grundplatte 2 verschoben und das zweite Ende 17 der Spiralfedern 10, 11 in Richtung P1 verschoben und damit die Spiralfedern 10, 11 in die Länge gezogen.

Am Ende des Spannvorgangs des Kraftspeichers 3 befindet sich der Auswerfer 5 in einer Lade-Endstellung, dies ist in Figur 7 gezeigt. Im Spannzustand des Kraftspeichers 3 befindet sich die Auswerfereinheit 1 in einem verriegelten Zustand.

Im verriegelten Zustand bestimmen das Verriegelungselement 41 der Kopplungseinrichtung 4 und das Verriegelungsorgan 7, welches als Klappe ausgestaltet ist, einen Verriegelungszustand, wobei eine Entladebewegung der Kopplungseinrichtung 4 vom Verriegelungsorgan 7 blockiert ist.

Das Spannen des Kraftspeichers 3 ist vollständig abgeschlossen, bevor beispielsweise eine Einzugsautomatik zum kraftunterstützten Einziehen der Schublade 53 in die vollständig geschlossene Schließstellung am Möbelkorpus 51 wirksam wird. Die Einzugsautomatik ist nicht Teil der Auswerfereinheit 1 und beispielsweise in den Führungsmitteln 52 bzw. den Teil- oder Vollauszügen integriert.

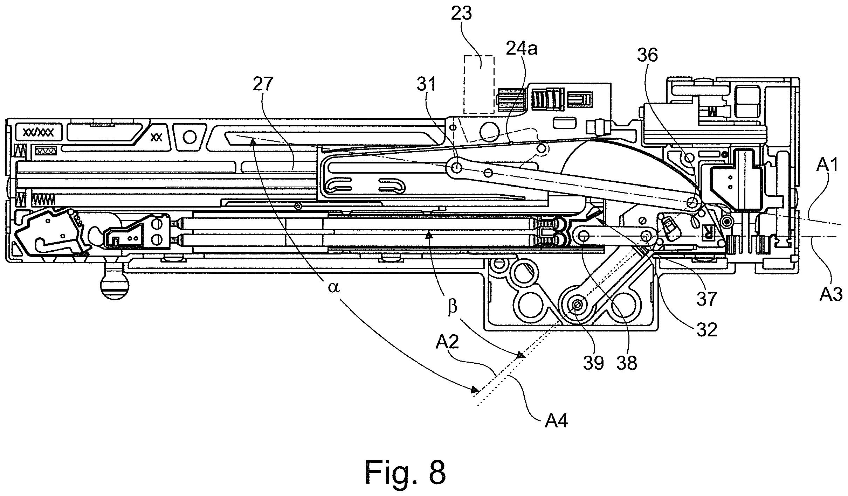

Nach dem Spannen des Kraftspeichers 3 wird durch die weitere Schließbewegung der Schublade 53 der Auswerfer 5 aufgrund der Anlage am Mitnehmer 23 in Richtung P1 relativ zur Grundplatte 2 bewegt. Hierbei wird die Wirkverbindung zwischen dem Klinkenbauteil 24 des Auswerfers 5 und dem Lagerzapfen 31 des Spannhebels 30 aufgehoben. Dies erfolgt durch ein Zusammenwirken der Führungsbahn 25 mit dem Führungszapfen 24a am Klinkenbauteil 24, wobei das Klinkenbauteil 24 durch die Führung des Führungszapfens 24a in der Führungsbahn 25 vom Lagerzapfen 31 weg geschwenkt wird (Figur 8). In diesem Zustand ist der Auswerfer 5 von der Kopplungseinrichtung 4 entkoppelt und soweit in Richtung P1 verfahrbar, insbesondere durch eine Einzugsautomatik, bis die Schublade 53 vollständig am Möbelkorpus 51 geschlossen ist und der Auswerfer 5 am Auslöser 6 in der Grundstellung gemäß Figur 3 ansteht.

In der Grundstellung der Auswerfereinheit 1 gemäß Figur 3 ist es einem Nutzer möglich die Schublade 53 ohne eine Auswerferfunktion bzw. ohne vorhergehendes Aufheben des Verriegelungszustands manuell in Öffnungsrichtung M1 zu ziehen. Hierbei bleibt der Kraftspeicher 3 der Auswerfereinheit 1 unbetätigt bzw. geladen.

Um die Schublade 35 mit der Auswerfereinheit 1 aus der am Möbelkorpus 51 vollständig eingeschobenen bzw. geschlossenen Stellung auszustoßen, muss ein Nutzer von außen drückend in Richtung M2 auf die Schublade einwirken. Hierfür weist die Auswerfereinheit 1 eine sogenannte Touch-Latch-Funktionalität auf, welche einen verriegelten Zustand kennt, der entriegelbar ist, indem die am Möbelkorpus 51 geschlossene eingeschobene Schublade 53 in Schließrichtung M2 bewegt wird. Diese Schließbewegung bzw. das Einwärtsdrücken der Schublade 53 in Richtung M2 erfolgt bis zum Erreichen einer Anschlagstellung entsprechend eines Frontspalts, der im geschlossenen Zustand der Schublade 53 insbesondere durch einen Abstand zwischen einer Innenseite der Schubladenfront 55 und einer vorderen Stirnseite bzw. den Seitenwänden 56 des Möbelkorpus 51 vorgegeben ist. Der Frontspalt beträgt in der Regel wenige Millimeter zum Beispiel ca. 1 bis 10 Millimeter.

Demgemäß ist die Entriegelung der Auswerfereinheit 1 derart abgestimmt, dass eine Schließbewegung der Schublade 53 in Richtung M2 von wenigen Millimetern bzw. maximal um den Betrag des Frontspalts ausreicht, die Entriegelung und damit das kraftunterstützte Auswerfen der Schublade 53 sicher vorzugeben.

Ausgehend von der Grundstellung gemäß Figur 3 wird die Auswerfereinheit 1 mit der Schublade 53 in Richtung M2 bewegt.

Da die Stellschraube 22 am Mitnehmer 23 ansteht, wird der Auswerfer 5 relativ zur Grundplatte 2 in Richtung P1 bewegt, womit ein Kontaktabschnitt 44 am Auswerfer 5 gegen den Auslöser 6 drückt und diesen entsprechend in Richtung P1 schiebt. Der Auslöser 6 ist begrenzt linear in Richtung P1 und P2 verschiebbar an der Grundplatte 2 vorhanden, in der Regel um wenige Millimeter bzw. weniger als das Maß des Frontspalts.

Der Auslöser 6 ist vorzugsweise direkt mit dem Verriegelungsorgan 7, welches als Klappe 43 ausgestaltet ist, derart gekoppelt, dass die lineare Auslösebewegung des Auslösers 6 in Richtung P1 die Klappe 43 in einer Drehbewegung um eine Schwenkachse D versetzt. Durch die Drehbewegung wird die Klappe 43 aus einer Arretierstellung gelöst, in welche die Klappe 43 durch ein als Blattfeder 49 ausgebildetes Federorgan gedrängt wird. Im verriegelten Zustand der Auswerfereinheit 1 blockiert die Klappe 43, die sich in der Arretierstellung befindet, den Führungshebel 34 bzw. den Hebelaufsatz 40 derart, dass der Kraftspeicher 3 in seinem geladenen Zustand verbleibt.

Mit der Drehbewegung der Klappe 43 wird die Blockade des Führungshebels 34 aufgehoben. Vorzugsweise schwenkt dabei das mit einer Schenkelfeder 60 vorgespannte Verriegelungselement 41 am Hebelaufsatz 40 aus.

Das am Hebelaufsatz 40 vorstehende Verriegelungselement 41 bewegt sich mit dem Schwenkvorgang des Führungshebels 34 unterhalb der Klappe 43 an dieser vorbei und führt die vom Auslöser 6 initiierte Drehbewegung der Klappe 43 um die Schwenkachse D ohne Unterbrechung weiter. Dadurch wird ein Drehwinkel der Klappe 43 aus der verriegelnden Stellung vorteilhaft vergrößert. Durch die Bewegung des Hebelaufsatzes 40 unter der Klappe 43 vorbei und weitergeführt durch das ausschwenkende Verriegelungselement 41, ist die Auswerfereinheit 1 sicher entriegelt. Hierzu ist vorteilhaft eine vergleichsweise sehr geringe lineare Auslösebewegung des Auslösers 6 in Richtung P1 nötig. Durch die Blattfeder 49 wird die Kappe 43 anschließend wieder in ihre Arretierstellung zurückgedrängt.

Beim Spannen des Kraftspeichers 3 kommt das, ausgeschwenkt am Hebelaufsatz 40, vorhandene Verriegelungselement 41 wiederum in Anlage mit einer Vorderkante der Klappe 43. Dabei weicht das Verriegelungselement 41 entgegen der Federkraft der Schenkelfeder 60 zurück, so dass es so weit an einem Rand des Hebelaufsatzes 40 versenkt ist, dass der Führungshebel 34 mit dem Hebelaufsatz 40 an der Klappe 43 vorbeischwenken kann.

Hinter der Klappe 43 wird das Verriegelungselement 41 durch die Federkraft der Schenkelfeder 60 wieder herausgeschwenkt. Nach dem Spannvorgang wird der Führungshebel 34 mit dem vorstehenden Verriegelungselement 41 gegen die von der Blattfeder 49 verriegelnd gehaltene Klappe 43 gedrückt, womit der Kraftspeicher 3 im verriegelten Zustand ist.

Die Drehbewegung der Klappe 43 der Auswerfereinheit 1 bzw. der Vorrichtung 58 wird über eine Synchronstange 61, welche an der Klappe 43 drehfest angeordnet ist, auf eine zweite vorteilhaft gleichwirkende Vorrichtung 62, welche an der Schublade 53 angeordnet ist, übertragen.

Vorteilhaft verbindet die Synchronstange 61 das Verriegelungsorgan 7 mit einem an der zweiten Vorrichtung 62 vorhandenem zweitem Verriegelungsorgan. Die beiden Verriegelungsorgane sind damit direkt und/oder synchron bewegungsgekoppelt. Dies stellt ein konträres Synchronisierungsprinzip zu einer Verbindung zwischen Auslöseelementen von zwei Auswerfereinrichtungen an einem Möbelteil dar.

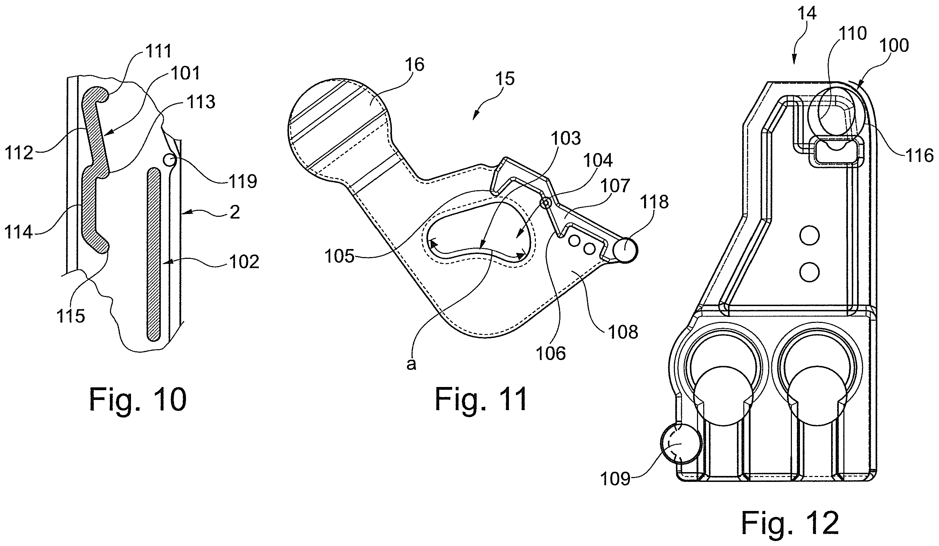

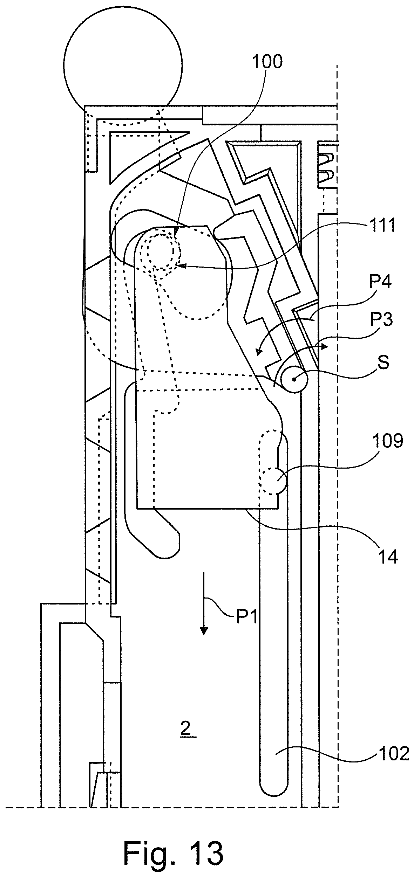

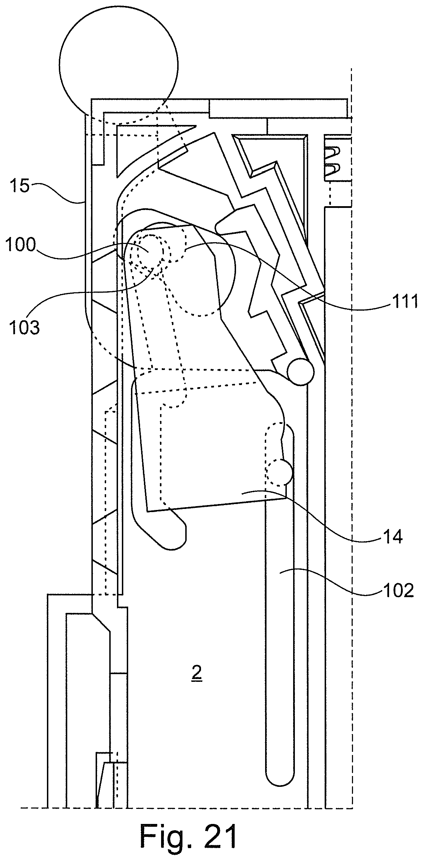

Figur 10 zeigt einen Ausschnitt in einem Bereich der Grundplatte 2, der sich in Verlängerung zum Kraftspeicher 3 befindet und in dem das Festlager 13 des Kraftspeichers 3 vorhanden ist. In der Grundplatte 2 sind zwei separate Kulissenführungen umfassend eine Führungsbahn 101 und eine Langlochbahn 102 ausgebildet. Die Führungsbahn 101 dient zusammen mit dem Stellteil 15 gemäß Figur 11 und dem Lagerteil 14 gemäß Figur 12 als Einstellmittel zur Verstellung einer Vorspannung des Kraftspeichers 3. Die Verstellung des Kraftspeichers 3 erfolgt durch die Verstellung der Position des Festlagers 13 mit dem Lagerteil 14, an dem das erste Ende des Kraftspeichers 3 bzw. die ersten Enden der Spiralfedern 10 und 11 befestigt sind. In den Figuren 13 bis 22 ist der Kraftspeicher 3 mit den am Lagerteil 14 lösbar eingehängten Spiralfedern 10, 11 nicht gezeigt.

Im Betrieb der Auswerfereinheit 1 bleibt dann das Festlager 13 in der voreingestellten Stellung. Im gezeigten Ausführungsbeispiel der Auswerfereinheit 1 ist eine stufenweise Verstellung mit drei unterschiedlichen Vorspannungen bzw. Vorspann-Niveaus des Kraftspeichers 3 realisiert. Gemäß der Figuren 3 bis 8 ist der Kraftspeicher 3 derart eingestellt, dass eine Stellung gemäß einer Stufe "Null" bzw. "0" eingerichtet ist, in welcher der Kraftspeicher 3 die geringste einstellbare Vorspannung bereitstellt, verglichen mit zwei weiteren Stellungen des Kraftspeichers 3 mit der Stufe "1", in welcher eine etwas größere Vorspannung als in Stufe "0" herrscht, und der Stufe "2" mit einer zur Stufe "1" etwas größeren Vorspannung.

Demgemäß kann das Festlager 13 in drei konkrete voneinander unterschiedliche Stellungen an der Grundplatte 2 verstellt werden. Vorteilhafterweise wird in allen drei Stellungen das Lagerteil 14 jeweils unter der Wirkung der gespannten Spiralfedern 10, 11 gegen ein Herausbewegen aus der eingestellten Stellung gesichert. Dabei steht das Lagerteil 14 unter einer Sicherungskraft, welche hier eine Zugkraft in Richtung P1 durch die auseinandergezogenen Spiralfedern 10, 11 bereitgestellt wird.

Grundsätzlich ist auch nur eine Spiralfeder oder eine andere Feder als Kraftspeicher möglich oder es sind mehr als zwei insbesondere getrennte zusammengefasste bzw. gemeinsam gleichartig wirksame Federn zur Bildung des Federpakets möglich.

Die Verstellung des Kraftspeichers 3 in eine der drei Stellungen mit den Stufen "0", "1" und "2" erfolgt manuell vorteilhaft ohne Werkzeug in einem Handgriff durch eine Person. Hierzu wird vor oder nach der Montage der Auswerfereinheit 1 der Bedienabschnitt 16 ergriffen und das Stellteil 15 um die Schwenkachse S im Uhrzeigersinn gemäß P3 oder gegen den Uhrzeigersinn gemäß P4 verschwenkt (s. Figur 13). Die Schwenklagerung des Stellteils 15 ist durch einen Lagerstift 118 am Stellteil 15 realisiert, der in eine passende Lagerbohrung 119 an der Grundplatte 2 etwas oberhalb eines dem Kraftspeicher 3 abgewandten Endes der Langlochbahn 102 eingreift.

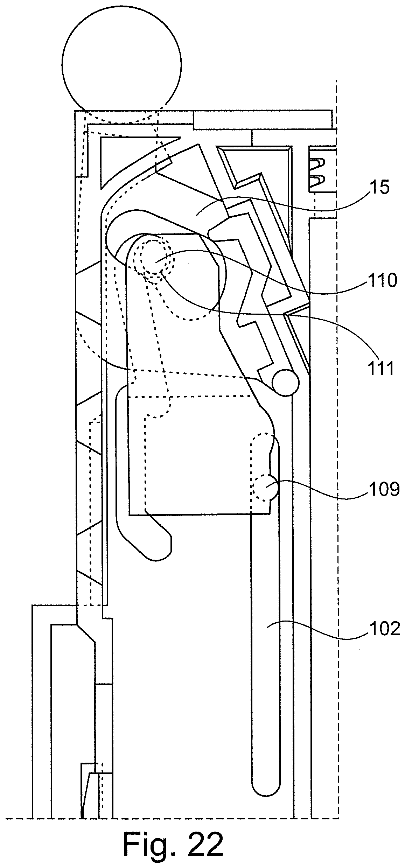

In den Figuren 13 und 22 ist die um die Schwenkachse S maximal in Richtung P3 verschwenkte Stellung des Stellteils 15 gezeigt, in welcher die Stellung des Kraftspeichers 3 eine maximale Vorspannung bereitstellt, was Stufe "2" entspricht.

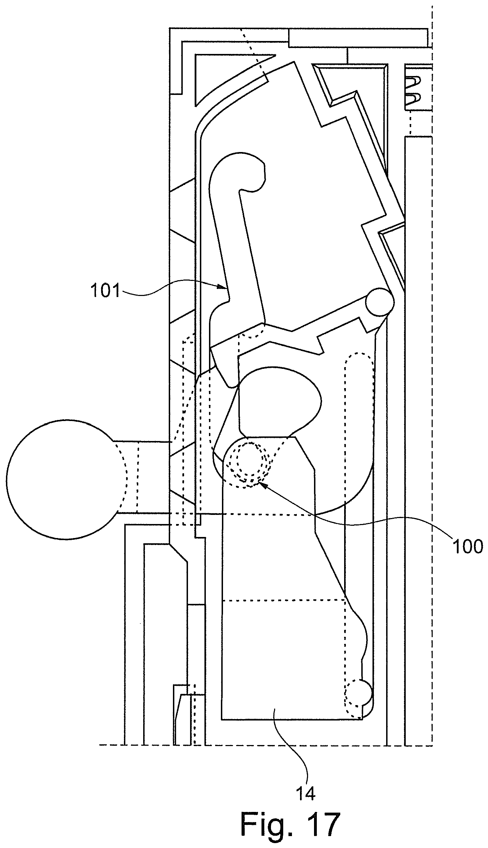

Figur 17 stellt die Stellung des Kraftspeichers 3 mit geringster Vorspannung mit Stufe "0" dar.

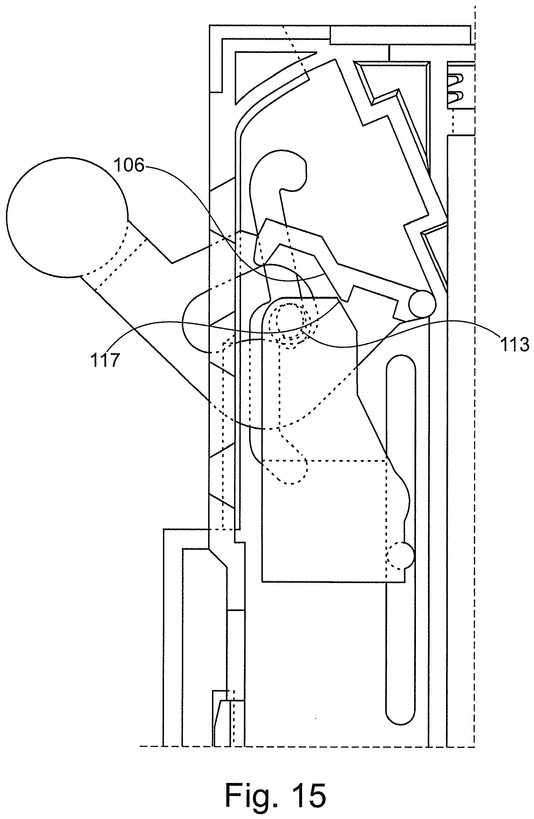

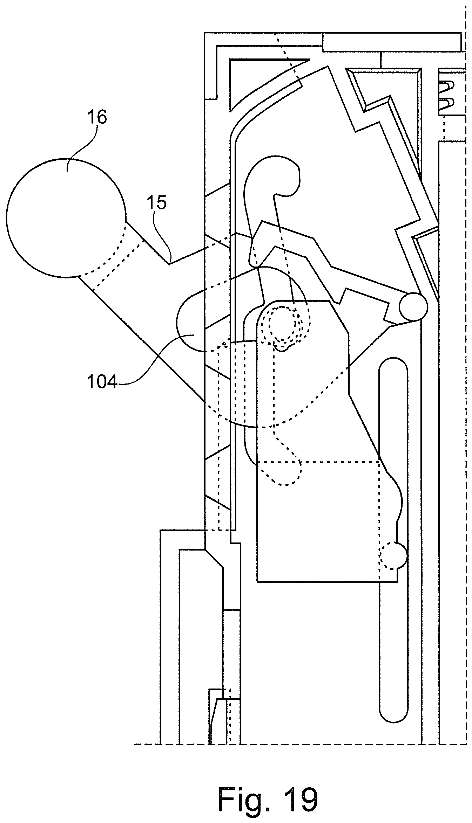

Die Stellung des Kraftspeichers 3 mit einer mittleren Vorspannung gemäß Stufe "1" ist aus den Figuren 15 und 19 ersichtlich.

Sämtliche weiteren Figuren stellen Momentaufnahmen bei der Bedienung bzw. dem Verschwenken des Stellteils 15 dar, was unter einem entsprechenden Kraftaufwand für die Person erfolgt, welche das Stellteil 15 bedient.

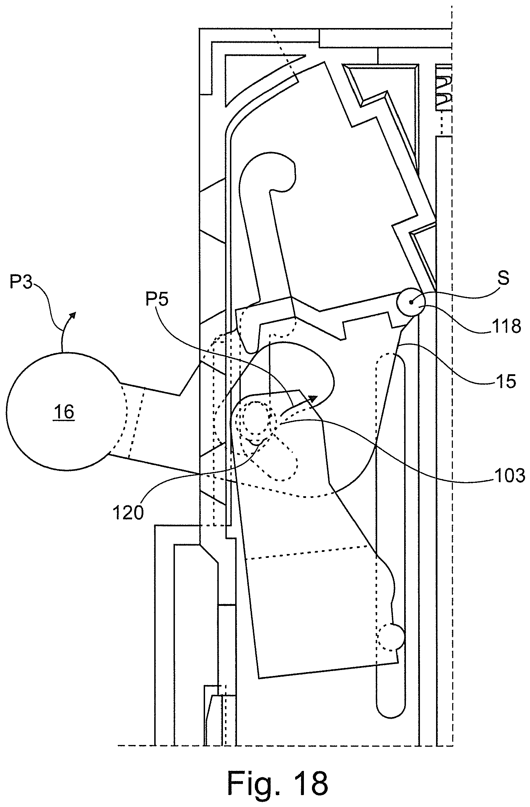

Demgemäß beschreiben die Momentaufnahmen nach den Figuren 13 bis 17 das Verstellen des Kraftspeichers 3 aus der Stufe "2" in die Stufe "0", womit ein Entspannen des Kraftspeichers 3 vorgenommen wird. Die Figuren 18 bis 22 verdeutlichen das Vorspannen des Kraftspeichers 3 aus der Stufe "0" in die Stufe "2".

Grundlegend für die definiert geführte Verstellung des Kraftspeichers 3 ist das Zusammenspiel des Stellteils 15 mit dem Lagerteil 14 und der Führungsbahn 101.

Mit dem manuellen Schwenken des Stellteils 15 wird das Lagerteil 14 vom Stellteil 15 mitbewegt, wobei die Position bzw. Bewegung des Lagerteils 14 durch die Führungsbahn 101 bzw. deren räumlichen Verlauf an der Grundplatte 2 vorgegeben ist.

Die Einstellmittel umfassen erfindungsgemäß zwei getrennte und relativ zueinander versetzbare Führungsbereiche, die insbesondere an getrennten Bauteilen vorhanden sind. Ein Führungsbereich ist beispielsweise positionsfest und hier durch die Führungsbahn 101 gebildet. Der weitere Führungsbereich ist versetzbar und befindet sich an dem Stellteil 15 und umfasst einen Öffnungsrand-Abschnitt 103 einer Führungsöffnung 104 in dem Stellteil 15 und Führungskonturen 105 und 106. Der Öffnungsrand-Abschnitt 103 erstreckt sich entlang dem konkav gebogenen Rand der Führungsöffnung 104 über die Länge a (s. Figur 11). Die erste Führungskontur 105 und die zweite Führungskontur 106 sind beide an einer Vorderseite eines Absatzes 107 ausgebildet. Der Absatz 107 steht an einer ebenen Oberseite 108 des Stellteils 15 nach oben sockelartig vor.

Die Position eines als Zapfen 100 gestalteter Eingreifabschnitts am Lagerteil 14 und damit die Position des Lagerteils 14 wird durch die Relativstellung der beiden Führungsbereiche vorgegeben. Im dargestellten Ausführungsbeispiel der Erfindung wird die Vorgabe des Eingreifabschnitts bzw. des Zapfens 100 und damit des Lagerteils 14 über die Führungsbahn 101 und die Schwenkstellung des Stellteils 15 bestimmt.

Hierzu greift der Zapfen 100, der am Lagerteil 14 auf einer zum Stellteil 15 hin gerichteten Seite absteht, durch die Führungsöffnung 104 bis in die Führungsbahn 101. Die möglichen Aufenthaltspositionen des Zapfens 100 und damit des Lagerteils 14 sind einerseits durch die materialfreie Fläche der Führungsöffnung 104 bestimmt und andererseits durch die Führungsbahn 101. Die Länge des Zapfens 100 ist größer als eine Dicke des Stellteils 15, so dass ein freier Endabschnitt des Zapfens 100 so weit in die Führungsbahn 101 hineinsteht, dass der Zapfen 100 in der Führungsbahn 101 sicher positioniert ist.

Für eine optimierte Verstellung des Lagerteils 14 ist ein weitere Zapfen als Lagerzapfen 109 abstehend am Lagerteil 14 ausgebildet, der in die linear sich erstreckende Langlochbahn 102 greift und darin in die Richtungen P1 und P2 entlanggleitend geführt ist, wenn das Lagerteil 14 verstellt wird.

Die jeweilige Spannstellung des Kraftspeichers 3 ist mit dem manuellen Schwenken des Stellteils 15 einstellbar, was nachfolgend mit Bezug auf die Ablaufstellungen gemäß der Figuren 13 bis 22 erläutert ist.

Gemäß Figur 13 befindet sich der vorgespannte Kraftspeicher 3 in der Stufe "2", wobei das Lagerteil 14 unter der Zugkraft der vorgespannten Spiralfedern 10, 11 in Richtung P1 beaufschlagt ist und in dieser Position gefangen ist. Hierbei wird der Zapfen 100 mit einem vorderen im Querschnitt in etwa eiförmigen Zapfenabschnitt 110 in eine Mulde eines oberen an der Führungsbahn 101 seitlich abgesetzten Bahnabschnitts 111 gedrückt. Der Bahnabschnitt 111 bildet einen Endabschnitt der Führungsbahn 101 mit einer Anschlagfunktion für den Zapfen 100 wie auch die Bahnabschnitte 113 und 115.

Die Stufe "2" wird voreingestellt, wenn beim Auswerfen mit der Auswerfereinheit 1 bzw. mit Hilfe des Kraftspeichers 3 die zu bewegende Masse in einem oberen Einsatzbereich liegt, zum Beispiel bei großen bzw. vergleichsweise breiten Schubladen mit einer hohen maximalen Beladung.

Die Führungsbahn 101 umfasst die weiteren Bahnabschnitte 112 bis 115 (s. Figur 10), die sich nach unten bzw. in Richtung P1 an den Bahnabschnitt 111 anschließen.

Der Zapfen 100 weist oberhalb des Zapfenabschnitts 110 einen Zapfenabschnitt 116 mit einem zur Außenform des Zapfenabschnitts 110 größeren überwiegend kreisförmigen Querschnitt auf. Der Zapfenabschnitt 116 ist ausgebildet, außenseitig mit dem Öffnungsrand-Abschnitt 103 der Führungsöffnung 104 in dem Stellteil 15 zusammenzuwirken.

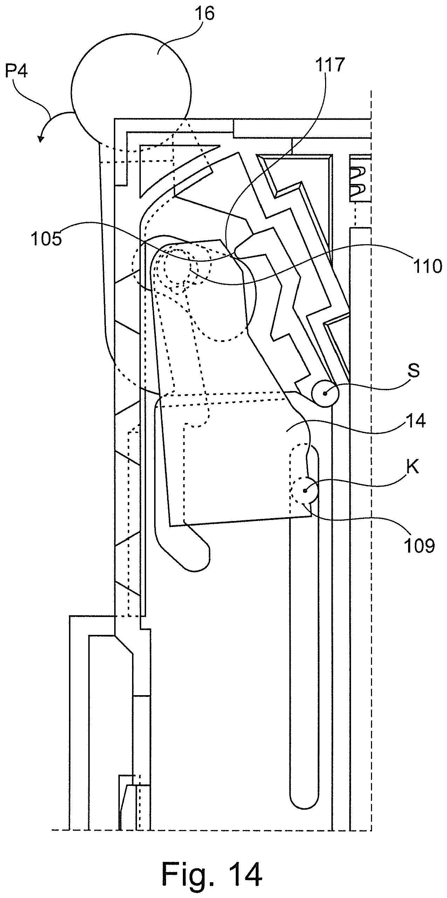

Um den Kraftspeicher 3 aus der maximal vorgespannten Stellung gemäß Stufe "2" in die Stufe "1" gemäß Figur 15 zu verstellen, wird das Stellteil 15 manuelle geringfügig in Richtung P4 verschwenkt (s. Figur 14). Dabei drückt die z. B. abgerundete Führungskontur 105 auf eine schräge Außenflanke 117 am Lagerteil 14. Dabei wird der Zapfenabschnitt 110 an den Bahnabschnitt 111 angedrückt, wobei das Lagerteil 14 um wenige Winkelgrade um eine Kippachse K am Lagerzapfen 109 entgegen dem Uhrzeigersinn verkippt wird. Dabei kommt der Zapfenabschnitt 110 aus der Mulde des Bahnabschnitts 111 frei. Anschließend, ohne weiteres Einwirken des Nutzers und unterstützt durch die Zugkraft der Spiralfedern 10, 11, rutscht das Lagerteil 14 selbsttätig in die dann vorgespannte Stellung des Kraftspeichers 3 gemäß Stufe "1". Auf dem Weg dorthin gleitet der Zapfenabschnitt 110 in der Führungsbahn 101 entlang des nach unten und etwas zur Langlochbahn 102 hin geneigt verlaufenden Bahnabschnitts 112. Der Verstellvorgang in die Stufe "1" der Kraftspeichervorspannung ist abgeschlossen, wenn der Zapfenabschnitt 110 wiederum unter der wirkenden Zugkraft der Spiralfedern 10, 11 in dem muldenartigen Bahnabschnitt 113 gefangen ist. Die Stufe "1" wird insbesondere dann voreingestellt, wenn beim Auswerfen mit der Auswerfereinheit 1 bzw. mit Hilfe des Kraftspeichers 3 die zu bewegende Masse in einem mittleren Einsatzbereich liegt.

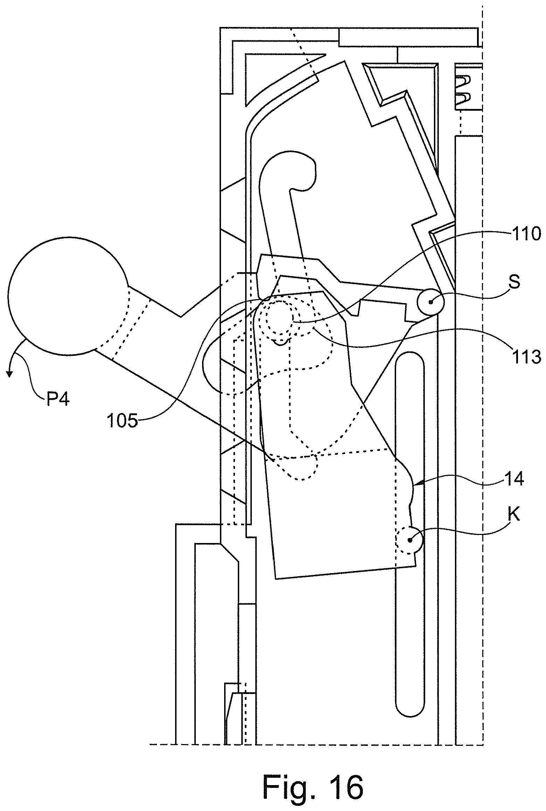

Auch für das Verstellen aus der Stufe "1" in die Stufe "0" gemäß Figur 17 muss der Nutzer das Stellteil 15 lediglich um wenige Winkelgrade um die Schwenkachse S in Richtung P4 versetzen, wobei der Zapfenabschnitt 110 mit Hilfe der am Lagerteil 14 andrückenden Flanke 105 aus der Mulde des Bahnabschnitts 113 herausbewegt wird, was Figur 16 verdeutlicht. Wie beim Lösen aus der Stufe "2" verkippt auch hierbei das Lagerteil 14 etwas um die Kippachse K am Lagerzapfen 109. Hierfür ist über das Einwirken auf das Stellteil 15 ein geringer bzw. kurzzeitiger Kraftaufwand gegen die Wirkung der gespannten Spiralfedern 10, 11 notwendig. Das Wegdrücken bzw. Versetzen des Lagerteils 14 durch das Schwenken des Stellteils 15 erfolgt mittels des Kontakts der schrägen Führungskontur 106 am Absatz 107 mit der schrägen Außenflanke 117 am Lagerteil 14 (s. Figur 15). Wenn das Lagerteil 14 aus der Mulde des Bahnabschnitts 113 herausgebracht ist, erfährt das Lagerteil 14 unter der Zugwirkung der Spiralfedern 10 und 11 eine Verstellbewegung in Richtung P1, wobei der Zapfenabschnitt 110 entlang des geraden Bahnabschnitts 114 selbsttätig in den seitlich abgebogenen Endbereich der Führungsbahn 101 bzw. in den Bahnabschnitt 115 einfährt und dort ansteht (s. Figur 17). Stufe "0" der Kraftspeichervorspannung ist dadurch voreingestellt, die dann gewählt wird, wenn beim Auswerfen mit der Auswerfereinheit 1 bzw. mit Hilfe des Kraftspeichers 3 die zu bewegende Masse in einem unteren Einsatzbereich liegen.

Der Zapfenabschnitt 110 ist in den jeweiligen Stufen "2", "1" und "0" in die jeweils dazugehörige Mulde der Führungsbahn 101 durch Zugkräfte in Richtung P1 gedrückt, wobei eine Außenseite des Zapfenabschnitts 110 sich an Wandungen der muldenförmigen Bahnabschnitte 111, 113 und 115 flächig anschmiegt.

Das Spannen des Kraftspeichers 3 aus der Kraftspeichervorspannung der Stufe "0" in die Stufe "1" und weiter in die Stufe "2", was ebenfalls mit dem manuellen Verschwenken des Stellteils 15 um die Schwenkachse S in Richtung P3 geschieht, verdeutlichen die Momentaufnahmen gemäß der Figuren 18 bis 22. Dabei kommt es zur Wechselwirkung zwischen dem Stellteil 15 und dem Lagerteil 14 über den Kontakt des Öffnungsrand-Abschnitts 103 mit dem Zapfenabschnitt 116. Dabei ist es vorzugsweise so, dass an einer vorgegebenen Stelle der ansonsten kreisförmigen Außenform des Zapfenabschnitts 116 eine konvexe Erhöhung 120 nach außen vorsteht, welche zeitweise mit dem Öffnungsrand-Abschnitt 103 in Anlage kommt.

Ausgehend von der Stufe "0" gemäß Figur 17 muss mit dem manuellen Schwenken des Stellteils 15 in Richtung P3 eine Kraft zum Spannen des Kraftspeichers 3 aufgebracht werden, bis die Stufe "1" gemäß Figur 19 erreicht ist, in welcher mit Hilfe der auf das Lagerteil 14 wirkenden Zugkraft der Spiralfedern 10, 11 das Lagerteil 14 in dieser Stellung selbstsichernd gehalten ist. Beim Verstellen aus der Stufe "0" in die Stufe "1" bewegt sich eine Kontaktstelle zwischen dem Zapfenabschnitt 116 und dem jeweiligen Punkt des Öffnungsrand-Abschnitts 103 in Richtung P5 (s. Figur 18) bzw. in Richtung zum Lagerstift 118 hin.

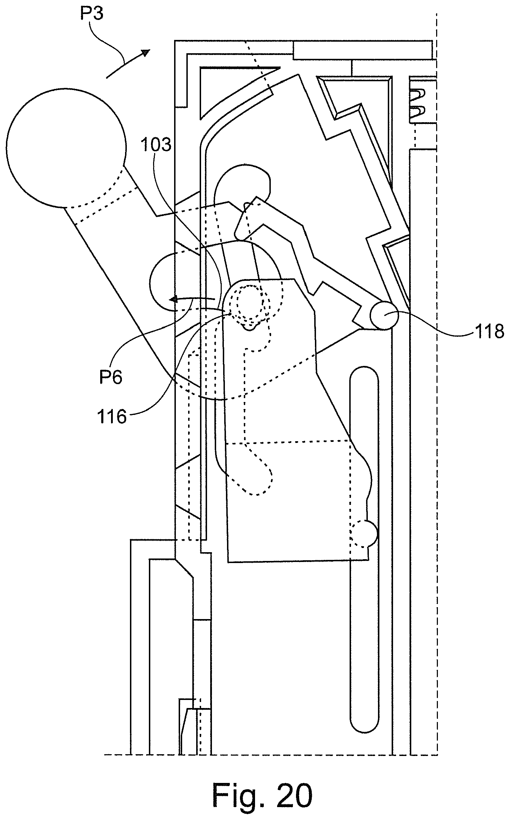

Beim Verstellen der Vorspannung des Kraftspeichers 3 aus der Stufe "1" in die Stufe "2" muss das Stellteil 15 weiter in Richtung P3 verschwenkt bzw. manuell am Bedienabschnitt 16 nach oben gedrückt werden, wobei der Zapfenabschnitt 110 durch den Öffnungsrand-Abschnitt 103 weggedrückt und aus der muldenförmigen Vertiefung des Bahnabschnitts 113 herausbewegt wird. Beim Verstellen aus der Stufe "1" in die Stufe "2" bewegt sich eine Kontaktstelle zwischen dem Zapfenabschnitt 116 und dem jeweiligen Punkt des Öffnungsrand-Abschnitts 103 in Richtung P6 (s. Figur 20) bzw. entgegen P5 bzw. in Richtung vom Lagerstift 118 weg. Die Spannkraft von außen ist so lange notwendig, bis die Stufe "2" gemäß Figur 22 erreicht ist, in welcher mit Hilfe der auf das Lagerteil 14 wirkenden Zugkraft der Spiralfedern 10, 11 das Lagerteil 14 in dieser Stellung selbstsichernd gehalten ist. Der Zapfenabschnitt 110 ist in der Mulde des Bahnabschnitts 111 gefangen. Das Verringern der Vorspannung des Kraftspeichers 3 aus der Stufe "2" in die Stufe "1" oder "0" kann dann wie oben zu den Figuren 13 bis 17 erläutert erfolgen.

In sämtlichen Positionen des Lagerteils 14 ist dieses nicht nur mit dem Zapfen 100 in der Führungsbahn 101 an der Grundplatte 2 geführt, sondern auch mit dem Lagerzapfen 109 in der Langlochbahn 102.

**Bezugszeichenliste:**

| | | | |
|---|---|---|---|
| 1 | Auswerfereinheit | 36 | Lagerzapfen |
| 2 | Grundplatte | 37 | Lagerzapfen |
| 3 | Kraftspeicher | 38 | Lagerzapfen |
| 4 | Kopplungseinrichtung | 39 | Lagerzapfen |
| 5 | Auswerfer | 40 | Hebelaufsatz |
| 6 | Auslöser | 41 | Verriegelungselement |
| 7 | Verriegelungsorgan | 42 | Anschlagselement |
| 8 | Frontspalt-Einstellanordnung | 43 | Klappe |
| | | 44 | Kontaktabschnitt |
| 9 | Abdeckbauteil | 45 | Gehäuse |
| 10 | Spiralfeder | 46 | Bedienabschnitt |
| 11 | Spiralfeder | 47 | Wandabschnitt |
| 12 | Ende | 48 | Wand |
| 13 | Festlager | 49 | Blattfeder |
| 14 | Lagerteil | 50 | Möbel |
| 15 | Stellteil | 51 | Möbelkorpus |
| 16 | Bedienabschnitt | 52 | Führungsmittel |
| 17 | Ende | 53 | Schublade |
| 18 | Bewegungselement | 54 | Schubladenboden |
| 19 | Führungskontur | 55 | Schubladenfront |
| 20 | Linearführung | 56 | Seitenwand |
| 21 | Kontaktabschnitt | 57 | Schubladenrückwand |
| 22 | Stellschraube | 58 | Vorrichtung |
| 23 | Mitnehmer | 59 | Korpusseitenwand |
| 24 | Klinkenbauteil | 60 | Schenkelfeder |
| 24a | Führungszapfen | 61 | Synchronstange |
| 25 | Führungsbahn | 62 | Vorrichtung |
| 26 | Anschlagselement | 63 | Linearführung |
| 27 | Führungsbahn | 100 | Zapfen |
| 28 | - | 101 | Führungsbahn |
| 29 | Anlageabschnitt | 102 | Langlochbahn |
| 30 | Spannhebel | 103 | Öffnungsrand-Abschnitt |
| 31 | Lagerzapfen | 104 | Führungsöffnung |
| 32 | Halteorgan | 105 | Führungskontur |
| 33 | Federelement | 106 | Führungskontur |
| 34 | Führungshebel | 107 | Absatz |
| 35 | Verbindungselement | 108 | Oberseite |
| 109 | Lagerzapfen | | |
| 110 | Zapfenabschnitt | | |
| 111-115 | Bahnabschnitt | | |
| 116 | Zapfenabschnitt | | |
| 117 | Außenflanke | | |
| 118 | Lagerstift | | |
| 119 | Lagerbohrung | | |
| 120 | Erhöhung | | |

## Patentansprüche

1. Vorrichtung (1) zum Bewegen eines bewegbaren Möbelteils (53) in eine Öffnungsrichtung des Möbelteils (53) in Bezug zu einem Möbelkorpus (51) eines Möbels (50), wobei das bewegbare Möbelteil (53) über Führungsmittel (52) in die Öffnungsrichtung und in eine der Öffnungsrichtung entgegengesetzte Schließrichtung bringbar ist, wobei die Vorrichtung (1) einen an einem Lagerteil (14) aufgenommenen Kraftspeicher (3) umfasst, so dass mit der montierten Vorrichtung (1) das bewegbare Möbelteil (53) unter der Wirkung des Kraftspeichers (3) in die Öffnungsrichtung des bewegbaren Möbelteils (53) bringbar ist, wobei das Lagerteil (14) einen Eingreifabschnitt (100) umfasst, und wobei Einstellmittel zur Verstellung des Kraftspeichers (3) vorhanden sind, wobei die Einstellmittel zwei voneinander getrennte Führungsbereiche (101; 104, 107) umfassen, die zur Führung des Eingreifabschnitts (100) des Lagerteils (14) abgestimmt sind, wobei die Führungsbereiche (101; 104, 107) relativ zueinander versetzbar sind, um einen Bereich vorzugeben, in dem der Eingreifabschnitt (100) aufgenommen und positioniert ist, wobei die Position des Eingreifabschnitts (100) durch das Zusammenwirken der beiden Führungsbereiche (101; 104, 107) bestimmt ist, so dass die Position des Eingreifabschnitts (100) an der Vorrichtung abhängig ist von der Relativstellung der beiden Führungsbereiche zueinander, **dadurch gekennzeichnet, dass** sich die beiden Führungsbereiche (101; 104, 107) benachbart teilweise überlagern und einen Überlagerungsbereich festlegen, in welchem der Eingreifabschnitt (100) aufgenommen und positioniert ist.

2. Vorrichtung nach Anspruch 1, **dadurch gekennzeichnet, dass** ein Führungsbereich (101) positionsfest ist.

3. Vorrichtung nach einem der vorhergehenden Ansprüche, **dadurch gekennzeichnet, dass** genau ein Führungsbereich (104, 107) bewegbar ist.

4. Vorrichtung nach einem der vorhergehenden Ansprüche, **dadurch gekennzeichnet, dass** ein Führungsbereich eine Führungskontur (103, 105, 106) umfasst.

5. Vorrichtung nach einem der vorhergehenden Ansprüche, **dadurch gekennzeichnet, dass** ein Führungsbereich (104, 107) an einem bewegbar an der Vorrichtung (1) vorhandenen Stellteil (15) ausgebildet ist, insbesondere an einem schwenkbar an der Vorrichtung vorhandenen Schwenkteil.

6. Vorrichtung nach einem der vorhergehenden Ansprüche, **dadurch gekennzeichnet, dass** die Führungsbereiche (101; 104, 107) aufeinander derart abgestimmt sind, um eine mehrstufige Verstellung des Lagerteils (14) vorzunehmen.

7. Vorrichtung nach einem der vorhergehenden Ansprüche, **dadurch gekennzeichnet, dass** an einem bewegbar gelagerten Bauteil ein Führungsbereich (107) vorhanden ist, welcher getrennte Kontaktabschnitte (105, 106) zur Kontaktierung mit dem Eingreifabschnitt (100) am Lagerteil (14) umfasst.

8. Vorrichtung nach einem der vorhergehenden Ansprüche, **dadurch gekennzeichnet, dass** an einem bewegbar gelagerten Bauteil (15) ein Führungsbereich vorhanden ist, wobei ein erster Kontaktabschnitt zur Kontaktierung mit dem Eingreifabschnitt (100) am Lagerteil (14) für die Erhöhung einer Vorspannung des Kraftspeichers (3) ausgebildet ist und ein zweiter Kontaktabschnitt zur Kontaktierung mit dem Eingreifabschnitt (100) am Lagerteil (14) für die Verringerung der Vorspannung des Kraftspeichers (3) ausgebildet ist.

9. Vorrichtung nach einem der vorhergehenden Ansprüche, **dadurch gekennzeichnet, dass** das Lagerteil (14) an der Vorrichtung (1) mit dem Eingreifabschnitt (100) geführt verstellbar ist, wobei das Lagerteil (14) über eine Hilfsführung (102) mit einem Hilfs-Eingreifabschnitt (109) an der Vorrichtung (1) geführt ist.

10. Vorrichtung nach einem der vorhergehenden Ansprüche, **dadurch gekennzeichnet, dass** die Einstellmittel derart abgestimmt sind, dass eine selbstsichernde Verstellposition des Lagerteils (14) an der Vorrichtung (1) unter der Wirkung des Kraftspeichers (3) eingerichtet ist.

11. Möbel (50) mit einem Möbelkorpus (51), an dem ein Möbelteil (53) über Führungsmittel (52) für eine geführte Bewegung in eine Öffnungsrichtung und in eine der Öffnungsrichtung entgegengesetzte Schließrichtung bewegbar ist, wobei eine Vorrichtung (58, 62) nach einem der vorhergehenden Ansprüche vorhanden ist.

## Claims

1. Device (1) for moving a movable furniture part (53) in an opening direction of the furniture part (53) in relation to a carcass (51) of an item of furniture (50), wherein the movable furniture part (53) can be moved via guide means (52) in the opening direction and in a closing direction which is counter to the opening direction, wherein the device (1) comprises a force accumulator (3) which is mounted on a bearing part (14) such that by means of the mounted device (1) the movable furniture part (53) can be moved by the action of the force accumulator (3) in the opening direction of the movable furniture part (53), wherein the bearing part (14) comprises an engagement section (100), and wherein adjusting means are provided for adjusting the force accumulator (3), wherein the adjusting means comprises two mutually separate guiding areas (101; 104, 107), which are adapted for guiding the engagement section (100) of the bearing part (14), wherein the guiding areas (101; 104, 107) can be mutually offset relative to one another in order to define an area in which the engagement section (100) is mounted and positioned, wherein the position of the engagement section (100) is determined by the interaction between the two guiding areas (101; 104, 107) such that the position of the engagement section (100) on the device depends on the mutual position of the two guiding areas relative to one another,
**characterised in that** the two guiding areas (101; 104, 107) partially overlap adjacent to one another and establish an overlap area in which the engagement section (100) is mounted and positioned.

2. Device according to claim 1, **characterised in that** a guiding area (101) has a fixed position.

3. Device according to any of the preceding claims, **characterised in that** precisely one guiding area (104, 107) is movable.

4. Device according to any of the preceding claims, **characterised in that** a guiding area comprises a guide contour (103, 105, 106).

5. Device according to any of the preceding claims, **characterised in that** a guiding area (104, 107) is formed on a control device (15) which is provided to be movable on the device (1), in particular on a pivot part provided so as to be pivotable on the device.

6. Device according to any of the preceding claims, **characterised in that** the guiding areas (101; 104, 107) are mutually adapted to one another, so as to readjust the bearing part (14) in multiple steps.

7. Device according to any of the preceding claims, **characterised in that** a guiding area (107), which comprises separate contact sections (105, 106) for contacting the engagement section (100) on the bearing part (14), is provided on a movably mounted component.

8. Device according to any of the preceding claims, **characterised in that** a guiding area is provided on a movably mounted component (15), wherein a first contact section for contacting the engagement section (100) on the bearing part (14) is designed for increasing a pretensioning of the force accumulator (3), and a second contact section for contacting the engagement section (100) on the bearing part (14) is designed for decreasing the pretensioning of the force accumulator (3).

9. Device according to any of the preceding claims, **characterised in that** the bearing part (14) on the device (1) can be adjusted in a guided manner by way of the engagement section (100), wherein the bearing part (14) is guided on the device (1) by an auxiliary guide (102) having an auxiliary engagement section (109).

10. Device according to any of the preceding claims, **characterised in that** the adjusting means are adapted in such a manner that a self-securing adjustment position of the bearing part (14) is established on the device (1) from the action of the force accumulator (3).

11. Item of furniture (50) having a carcass (51) on which a furniture part (53) can be moved via guide means (52) for guided movement in an opening direction and in a closing direction which is counter to the opening direction, wherein a device (58, 62) according to any of the preceding claims is provided.

## Revendications

1. Dispositif (1) pour déplacer une partie de meuble (53) mobile dans une direction d'ouverture de la partie de meuble (53) par rapport à un corps de meuble (51) d'un meuble (50), la partie de meuble (53) mobile pouvant être amenée dans la direction d'ouverture et dans une direction de fermeture opposée à la direction d'ouverture par le biais de moyens de guidage (52), le dispositif (1) comprenant un accumulateur de force (3) reçu sur une pièce d'appui (14), de sorte qu'avec le dispositif (1) monté, la partie de meuble (53) mobile peut être amenée dans la direction d'ouverture de la partie de meuble (53) mobile sous l'action de l'accumulateur de force (3), la pièce d'appui (14) comprenant une section d'engagement (100), et des moyens de réglage étant prévus pour déplacer l'accumulateur de force (3), les moyens de réglage comprenant deux sections de guidage (101 ; 104, 107) distinctes qui sont aptes à guider la section d'engagement (100) de la pièce d'appui (14), les sections de guidage (101 ; 104, 107) pouvant être déplacées l'une par rapport à l'autre pour définir une zone dans laquelle la section d'engagement (100) est reçue et positionnée, la position de la section d'engagement (100) étant déterminée par la coopération des deux sections de guidage (101 ; 104, 107), de sorte que la position de la section d'engagement (100) sur le dispositif dépend de la position relative des deux sections de guidage l'une par rapport à l'autre, **caractérisé en ce que** les deux sections de guidage (101 ; 104, 107) voisines se chevauchent partiellement et définissent une zone de chevauchement dans laquelle la section d'engagement (100) est reçue et positionnée.

2. Dispositif selon la revendication 1, **caractérisé en ce que** la position d'une section de guidage (101) est fixe.

3. Dispositif selon l'une des revendications précédentes, **caractérisé en ce qu'**exactement une section de guidage (104, 107) est mobile.

4. Dispositif selon l'une des revendications précédentes, **caractérisé en ce qu'**une section de guidage comprend un contour de guidage (103, 105, 106).

5. Dispositif selon l'une des revendications précédentes, **caractérisé en ce qu'**une section de guidage (104, 107) est formée sur une partie d'actionnement (15) qui est présente mobile sur le dispositif (1), en particulier sur une partie pivotante qui est présente pivotante sur le dispositif.

6. Dispositif selon l'une des revendications précédentes, **caractérisé en ce que** les sections de guidage (101 ; 104, 107) sont adaptées l'une à l'autre de sorte à réaliser un réglage à plusieurs étages de la pièce d'appui (14).

7. Dispositif selon l'une des revendications précédentes, **caractérisé en ce qu'**une section de guidage (107) est présente sur un composant monté mobile, laquelle section de guidage comprend des sections de contact (105, 106) séparées pour établir le contact avec la section d'engagement (100) sur la pièce d'appui (14).

8. Dispositif selon l'une des revendications précédentes, **caractérisé en ce qu'**une section de guidage est présente sur un composant monté mobile (15), une première section de contact étant formée pour établir le contact avec la section d'engagement (100) sur la pièce d'appui (14) afin d'augmenter une précontrainte de l'accumulateur de force (3), et une seconde section de contact étant formée pour établir un contact avec la section d'engagement (100) sur la pièce d'appui (14) afin de réduire la précontrainte de l'accumulateur de force (3).

9. Dispositif selon l'une des revendications précédentes, **caractérisé en ce que** la pièce d'appui (14) peut être déplacée sur le dispositif (1) en étant guidée par la section d'engagement (100), la pièce d'appui (14) étant guidée sur le dispositif (1) par le biais d'un guide auxiliaire (102) avec une section d'engagement auxiliaire (109).

10. Dispositif selon l'une des revendications précédentes, **caractérisé en ce que** les moyens de réglage sont accordés de telle sorte qu'une position de déplacement autobloquante de la pièce d'appui (14) sur le dispositif (1) est obtenue sous l'effet de l'accumulateur de force (3).

11. Meuble (50) comprenant un corps de meuble (51) sur lequel une partie de meuble (53) peut être déplacée par le biais de moyens de guidage (52) pour un mouvement guidé dans une direction d'ouverture et dans une direction de fermeture opposée à la direction d'ouverture, un dispositif (58, 62) selon l'une des revendications précédentes étant prévu.
